# EUROPEAN PATENT SPECIFICATION

(11) **EP 1 471 121 B1**
(45) Date of publication and mention of the grant of the patent: **21.06.2006**
(21) Application number: 04009605.9
(22) Date of filing: 22.04.2004
(51) Int. Cl.: C09D 11/00

(54) **Inkjet recording ink composition and inkjet recording method**
Zusammensetzung von Tintenstrahldruckfarben und Tintenstrahlaufzeichnungsverfahren
Composition d'encre pour l'enregistrement par jet d'encre et méthode d'enregistrement

(30) Priority: 25.04.2003 JP 2003122111; 30.05.2003 JP 2003154781
(43) Date of publication of application: 27.10.2004
(73) Proprietor: FUJI PHOTO FILM CO., LTD., Minami-Ashigara-shi, Kanagawa (JP)
(72) Inventor: Aoshima, Keitaro, Yoshida-cho Haibara-gun Shizuoka (JP)
(74) Representative: HOFFMANN EITLE

(56) References cited:
- US-A- 5 952 048

## Description

### Background of the Invention

### 1. Field of the invention

The present invention relates to an inkjet recording ink composition and an inkjet recording method.

### 2. Related Art

The method for forming an image on a recording medium such as paper based on image data signals includes an electrophotographic system, a sublimation-type or melting-type heat-transfer system and an inkjet system. The electrophotographic system requires a process of forming an electrostatic latent image on a photoreceptor drum through electrification and exposure and therefore, suffers from complicated system and expensive apparatus. The heat-transfer system uses an ink ribbon and therefore, suffers from high running cost and treatment of a waste material, though the apparatus therefor is inexpensive. The inkjet system uses an inexpensive apparatus and performs the printing directly on a printing medium by ejecting an ink only on a desired image area, ensuring efficient use of an ink and low running cost. Furthermore, this system generates less noises and therefore, is excellent as the image recording system.

The inkjet recording system includes a system of spraying an ink droplet by utilizing the pressure of water vapor generated due to heat of a heating element, a system of spraying an ink droplet by utilizing a mechanical pressure pulse generated from a piezoelectric element, and a system of spraying an ink droplet containing a charged particle by utilizing an electrostatic field (see, Japanese Patent No. 3, 315, 334 and U.S.P. 6, 158, 844) . In the system of spraying an ink droplet by water vapor or mechanical pressure, the spraying direction of an ink droplet cannot be controlled and due to distortion of an ink nozzle or convection of an air, it is difficult to land the ink droplet exactly on a desired position of a recording medium.

On the other hand, the system of utilizing an electrostatic field is an excellent system, where the spraying direction of an ink droplet is controlled by an electrostatic field and therefore, the ink droplet can be landed exactly on a desired position, as a result, a high-quality image-formed material (printed matter) can be obtained.

The ink composition used in the inkjet recording utilizing an electrostatic field is an ink composition comprising a dispersion medium and a charged particle containing at least a coloring material (see, JP-A-8-291267 (the term "JP-A" as used herein means an "unexamined published Japanese patent application") and U.S.P. 5,952,048). The ink composition containing a coloring material is useful because four color inks of yellow, magenta, cyan and black and furthermore, special inks of gold or silver can be prepared by changing the coloring material and a color image-formed material (printed matter) can be obtained. However, in the long-term inkjet recording, it has been heretofore difficult to always stably eject an ink droplet.

### Summary of the Invention

The present invention has been made with an aim to always stably eject an ink droplet in the inkjet recording for a long period of time and an object of the present invention is to provide an inkjet recording ink composition and an inkjet recording method, which can realize the formation of a high-quality image for a long period of time.

As a result of intensive investigations to attain the above-described object, the present inventors have found that the ejection property of an ink droplet is greatly dependent on physical properties of the ink used, requiring these properties each to fall in a specific range, and also greatly dependent on the method of supplying the ink to the ejection part. The present invention has been accomplished based on this finding.

That is, the present invention has the following constitution.
1. An inkjet recording ink composition comprising a charged particle containing 0.1 to 50 wt.% of a pigment covered by 0.1 to 40 wt.% of a covering material based on the entire ink composition, 20 to 99 wt.% of a dispersion medium, 0.1 to 30 wt.% of a dispersant and 0.0001 to 10 wt.% of a charge-control agent,
   wherein said ink composition satisfies all of the following conditions (A) to (D):
   (A) the electric conductivity at 20°C of the ink composition is from 10 to 300 nS/m,
   (B) the electric conductivity at 20°C of the charged particle is 50% or more of the electric conductivity of the ink composition,
   (C) the volume average diameter of the charged particle is from 0.2 to 5.0 µm, and
   (D) the viscosity at 20°C of the ink composition is from 0.5 to 5 mPa·s,
   wherein the covering agent is a polymer, containing any one of the constituent units represented by the following formulae (1) to (4). 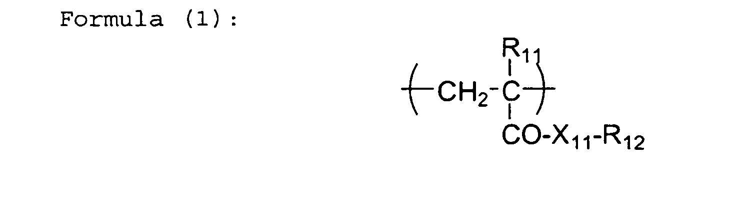 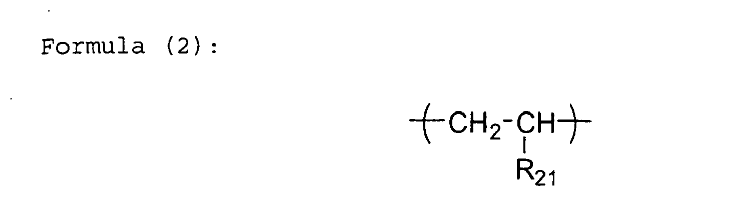 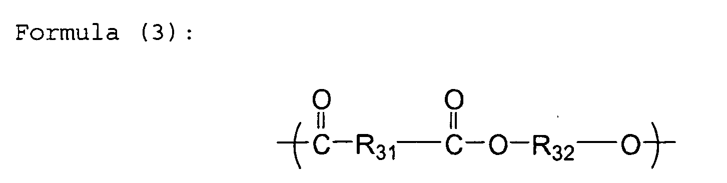 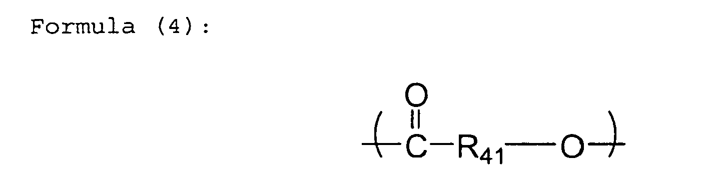 wherein X₁₁ represents an oxygen atom or -N(R₁₃)-, R₁₁ represents a hydrogen atom or a methyl group, R₁₂ represents a hydrocarbon group having from 1 to 30 carbon atoms, R₁₃ represents a hydrogen atom or a hydrocarbon group having from 1 to 30 carbon atoms, R₂₁ represents a hydrogen atom or a hydrocarbon group having from 1 to 20 carbon atoms, and R₃₁, R₃₂ and R₄₁ each independently represents a divalent hydrocarbon group having from 1 to 20 carbon atoms, provided that the hydrocarbon groups of R₁₂, R₂₁, R₃₁, R₃₂ and R₄₁ each may contain an ether bond, an amino group, a hydroxy group or a halogen-substituted group,
   and the dispersant is a graft polymer comprising at least a polymer component containing at least either one of the constituent units represented by the following formulae (5) and (6), and a polymer component containing a constituent unit represented by the following formula (7) at least as a graft chain: 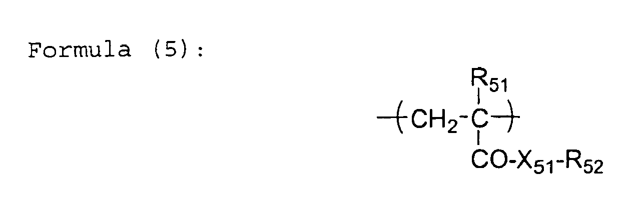 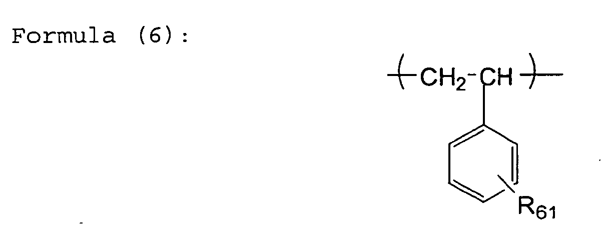 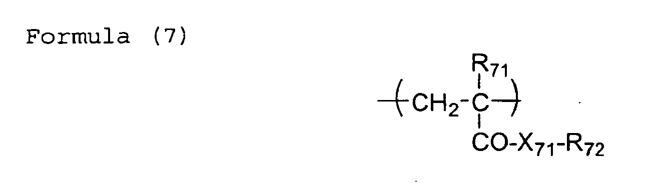 wherein X₅₁ represents an oxygen atom or -N(R₅₃)-, R₅₁ represents a hydrogen atom or a methyl group, R₅₂ represents a hydrocarbon group having from 1 to 10 carbon atoms, R₅₃ represents a hydrogen atom or a hydrocarbon group having from 1 to 10 carbon atoms, R₆₁ represents a hydrogen atom, a hydrocarbon group having from 1 to 20 carbon atoms, a halogen atom, a hydroxyl group or an alkoxy group having from 1 to 20 carbon atoms, X₇₁ represents an oxygen atom or -N(R₇₃)-, R₇₁ represents a hydrogen atom or a methyl group, R₇₂ represents a hydrocarbon group having from 4 to 30 carbon atoms, and R₇₃ represents a hydrogen atom or a hydrocarbon group having from 1 to 30 carbon atoms, provided that the hydrocarbon groups of R₅₂ and R₇₂ each may contain an ether bond, an amino group, a hydroxy group or a halogen-substituted group.
2. The inkjet recording ink composition as described in item 1, wherein the charged particle has an electric charge amount of from 5 to 200 µC/g.
3. An inkjet recording method comprising spraying, by utilizing an electrostatic field, and ink droplet of an ink composition comprising a dispersion medium and a charged particle containing coloring material, said ink composition satisfying all of the following conditions (A) to (D),
   wherein the method comprises: circulating the ink composition in an ink chamber having an ejection opening; and applying a voltage to a control electrode in the periphery of the ejection opening to spray the ink droplet from the tip of an ink guide, in which the ink guide is present in the ejection opening and the tip of the ink guide faces a recording medium:
   (A) the electric conductivity at 20°C of the ink composition is from 10 to 300 nS/m,
   (B) the electric conductivity at 20°C of the charged particle is 50% or more of the electric conductivity of the ink composition,
   (C) the volume average diameter of the charged particle is from 0.2 to 5.0 µm, and
   (D) the viscosity at 20°C of the ink composition is from 0.5 to 5 mPa · s.
4. An inkjet recording method comprising spraying, by an inkjet recording system utilizing an electrostatic field, an ink droplet of an ink composition comprising a dispersion medium and a charged particle containing a coloring material, wherein an ink composition having a high concentration is replenished so that the ink composition used can constantly satisfy all of the following conditions (A) to (D):
   (A) the electric conductivity at 20°C of the ink composition is from 10 to 300 nS/m,
   (B) the electric conductivity at 20°C of the charged particle is 50% or more of the electric conductivity of the ink composition,
   (C) the volume average diameter of the charged particle is from 0.2 to 5.0 µm, and
   (D) the viscosity at 20°C of the ink composition is from 0.5 to 5 mPa·s.
5. The inkjet recording method as described in item 4, wherein the charged particle is dispersed in the dispersion medium by using a graft polymer as a dispersant.
6. The inkjet recording method as described in item 5, wherein said graft polymer comprises a main chain moiety and a side chain moiety of a graft chain, in which the main chain moiety is not dissolved in the dispersion medium and the side chain moiety is dissolved in the dispersion medium.
7. The inkjet recording method as described in item 4, wherein that charged particle has an electric charge amount of from 5 to 200 µC/g.
8. The inkjet recording method as described in item 4, which comprises the dispersion medium in an amount of from 20 to 99 wt% based on the entire ink composition.
9. The inkjet recording method as described in item 4 wherein the coloring material is a pigment and the pigment content is from 0.1 to 50 wt% based on the entire ink composition.
10. The inkjet recording method as described in item 4
wherein the charged particle is a pigment coated with a covering agent. of the inkjet head of the inkjet recording apparatus for use in the present invention (for clearly showing the constitution, the edge of the guard electrode in each ejection part is not drawn).

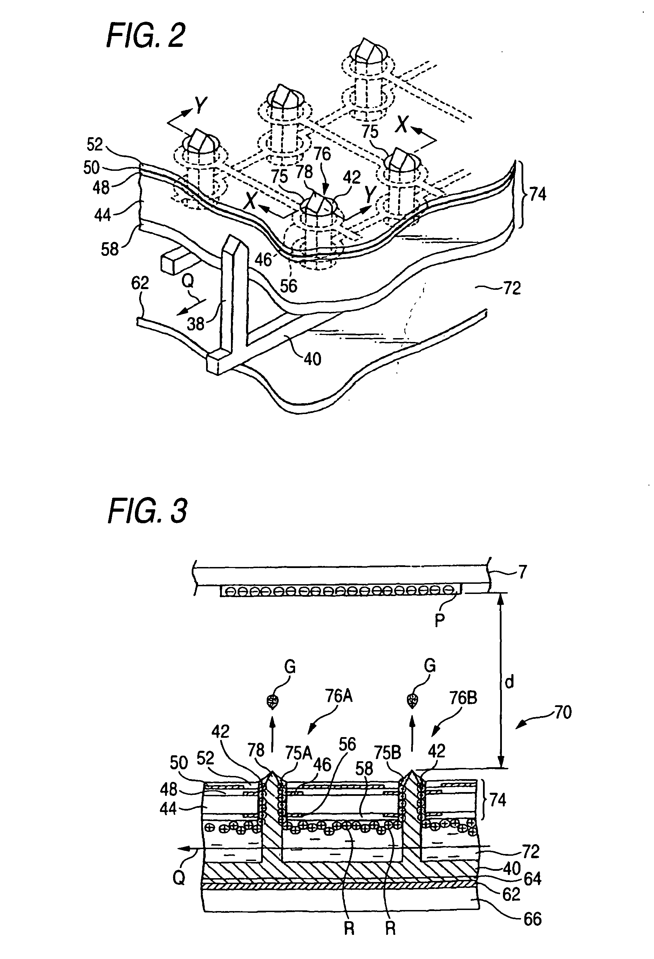

Fig. 3 is a side cross-sectional view showing the distributed state of charged particles (corresponding to the portion cut along the arrow X-X in Fig. 2) when a large number of ejection parts are used in the inkjet head shown in Fig. 2.

### Description of Symbols and Numerals

- G: spraying ink droplet
- P: recording medium
- Q: ink flow
- R: charged particle
- 1: inkjet recording apparatus
- 2, 2Y, 2M, 2C, 2K: ejection head
- 3: ink circulating system
- 4: head driver
- 5: position-controlling means
- 6A to 6C: rollers for straining the conveyance belt
- 7: conveyance belt
- 8: conveyance belt position-detecting means
- 9: electrostatic adsorption means
- 10: destaticizing means
- 11: dynamic means
- 12: feed roller
- 13: guide
- 14: image fixing means
- 15: guide
- 16: recording medium position-detecting means
- 17: ventilation fan ,
- 18: solvent vapor adsorbent
- 38: ink guide
- 40: supporting rod part
- 42: ink meniscus
- 44: insulating layer
- 46: first ejection electrode
- 48: insulating layer
- 50: guard electrode
- 52: insulating layer
- 56: second ejection electrode
- 58: insulating layer
- 62: floating conductive plate
- 64: covering film
- 66: insulating member
- 70: inkjet head
- 72: ink flow path
- 74: substrate
- 75, 75A, 75B: opening
- 76, 76A, 76B: ejection part
- 78: ejection part

### DETAILED DESCRIPTION OF THE INVENTION

The ink composition of the present invention is used for recording an image on a recording medium by an inkjet recording system. In the present invention, an ink composition satisfying all of the following conditions (A) to (D) is used, whereby an ink droplet can be always stably ejected in the inkjet recording for a long period of time:
(A) the electric conductivity at 20°C of the ink composition is from 10 to 300 nS/m, preferably from 30 to 200 nS/m,
(B) the electric conductivity at 20°C of the charged particle is 50% or more, preferably 60% or more, of the electric conductivity of the ink composition,
(C) the volume average diameter of the charged particle is from 0.2 to 5.0 µm, preferably from 0.3 to 3.0 µm, and
(D) the viscosity of the ink composition is from 0.5 to 5 mPa·s, preferably from 0.8 to 4 mPa·s.

The conditions to be satisfied in the ink composition of the present invention will be described in detail, but the electric conductivity is a measured value at 20°C, unless there is a specific definition.

In the present invention, the electric conductivity of the ink composition is from 10 to 300 nS/m. If the electric conductivity of the ink composition is less than 10 nS/m, an ink droplet cannot be ejected, whereas if it exceeds 300 nS/m, electric conduction occurs in the head (ejection part) of an inkjet recording apparatus and the head is damaged. The electric conductivity of the ink composition is preferably from 30 to 200 nS/m.

The electric conductivity of the charged particle is a value determined by centrifuging the ink composition to precipitate charged particles, measuring the electric conductivity of the supernatant and subtracting the obtained value from the electric conductivity of the ink composition. In the present invention, the electric conductivity of the charged particle is 50% or more of the electric conductivity of the ink composition. In the inkjet recording system utilizing an electrostatic field, concentration of charged particles occurs at the ejection of an ink droplet, but if the electric conductivity of the charged particle is less than 50% of the electric conductivity of the ink composition, insufficient concentration results and bleeding of the ink recorded on a recording medium is caused. The electric conductivity of the charged particle is preferably 60% or more of the electric conductivity of the ink composition.

The electric charge amount of the charged particle is preferably from 5 to 200 µC/g. If the electric charge amount is less than this range, insufficient concentration results, whereas if it exceeds this range, excessive concentration occurs and the ink readily clogs at the head ejection port. The electric charge amount is more preferably from 10 to 150 µC/g, still more preferably from 15 to 100 µC/g.

The volume average diameter of charged particles can be measured, for example, by a centrifugal precipitation method using a device such as Ultracentrifugal Automatic Particle Analyzer CAPA-700 (manufactured by Horiba Ltd.). The average diameter includes a volume average diameter, a number average diameter and the like according to the calculation method, but in the present invention, the volume average diameter of charged particles is from 0.2 to 5.0 µm. If the volume average diameter is less than 0.2 µm, insufficient concentration of charged particles results and bleeding of the ink recorded on a recording medium occurs, whereas if the volume average diameter exceeds 5.0 µm, clogging is readily caused at the head ejection port. The volume average diameter is preferably from 0.3 to 3.0 µm. The particle size distribution is preferably narrow and uniform.

In the present invention, the viscosity of the ink composition is from 0.5 to 5 mPa·s. If the viscosity is less than this range, the ink composition drips from the ink ejection port of the head, whereas if it exceeds this range, an ink droplet cannot be ejected. The viscosity is more preferably from 0.8 to 4 mPa·s. The surface tension of the ink composition is preferably from 10 to 70 mN/m. If the surface tension is less than this range, the ink composition drips from the ink ejection port of the head whereas if it exceeds this range, an ink droplet cannot be ejected. The surface tension is more preferably from 15 to 50 mN/m.

The electric conductivity of the ink composition and the electric conductivity of the charged particle each can be adjusted by the kind and amount added of the dispersion medium used and the kind and amount added of the charge-control agent used. The charge-control agent generates an electric charge by the action of ion dissociation and adsorption or the like to the particle and therefore, greatly contributes to the electric conductivity of the charged particle. Accordingly, the conditions (A) and (B) of the present invention can be achieved by using a liquid having low electric conductivity or high electric resistivity as the dispersion medium and causing a charge-control agent to impart electric conductivity to the particle.

Some coloring materials for use in the present invention have electric conductivity, but by coating the coloring material with a covering agent, the electric conductivity can be masked and the control of electric conductivity to the particle by the charge-control agent can be facilitated.

The volume average particle size of the charged particle can be adjusted by the kind and amount added of the dispersant used and the device used for the dispersion (formation of particles). The dispersant adsorbs to the charged particle and disperses the particles in the dispersion medium and therefore, by appropriately adjusting the adsorption strength of the dispersant to the charged particle and the affinity of the dispersant for the dispersion medium, the volume average diameter can be controlled and the condition (C) of the present invention can be achieved.

The viscosity of the ink composition can be adjusted by the kind and amount of the dispersion medium used and the kind and amount of the polymer component dissolved in the dispersion medium, such as dispersant. The viscosity may also be adjusted by further using a surfactant. By appropriately using these, the condition (D) of the present invention can be achieved.

### [Dispersion Medium]

The dispersion medium is preferably a dielectric liquid having a high electric resistivity, specifically 10¹⁰ Ωcm or more. If a dispersion medium having a low electric resistivity is used, electric conduction is generated between adjacent recording electrodes and this is improper. The dielectric constant of the dielectric liquid is preferably 5 or less, more preferably 4 or less, still more preferably 3.5 or less. With a dielectric constant in such a range, an electric field can effectively act on the charged particles in the dielectric liquid and this is preferred.

The ink composition of the present invention comprises a dispersion medium and a charged particle containing a coloring material. Each component of the ink composition of the present invention will be described in detail.

The dispersion medium for use in the present invention includes a linear or branched aliphatic hydrocarbon, an alicyclic hydrocarbon, an aromatic hydrocarbon, a halogen substitution product of these hydrocarbons, and silicone oil. Examples thereof include hexane, heptane, octane, isooctane, decane, isodecane, decalin, nonane, dodecane, isododecane, cyclohexane, cyclooctane, cyclo-decane, toluene, xylene and mesitylene. Specific examples thereof include Isoper C, Isoper E, Isoper G, Isoper H, Isoper L, Isoper M (Isoper: a trade name of Exxon Corp.), Shellsol 70, Shellsol 71 (Shellsol: a trade name of Shell Oil Corp.), Amsco OMS solvent, Amsco 460 solvent (Amsco: a trade name of American Mineral Spirits Co.) and KF-96L (a trade name of Shin-Etsu Silicone). These can be used individually or in combination. The dispersion medium content is from 20 to 99 wt% based on the entire ink composition. With a dispersion medium content of 20 wt% or more, coloring material-containing particles can be dispersed in the dispersion medium and with a dispersion medium content of 99 wt% or less, the coloring material content can be satisfied.

### [Coloring Material]

The coloring material which can be used in the present invention includes known pigments. The coloring material can be selected according to use or purpose. For example, in view of color tone of the image-recorded material (printed matter), a pigment is preferably used (see, for example, Ganryo Bunsan Anteika to Hyomen Shori Gijutsu-Hyoka (Stabilization of Pigment Dispersion and Technique and Evaluation of Surface Treatment), 1st imp., Gijutsu Joho Kyokai (December 25, 2001), hereinafter sometimes referred to as "Non-Patent Document 1"). By changing the coloring material, four color inks of yellow, magenta, cyan and black can be prepared. In particular, when a pigment used for the offset printing ink or proof is used, the same color tone as an offset printed matter can be obtained and this is preferred.

Examples of the pigment for yellow ink include monoazo pigments such as C.I. Pigment Yellow 1 and C.I. Pigment Yellow 74, disazo pigments such as C.I. Pigment Yellow 12 and C.I. Pigment Yellow 17, non-benzidine azo pigments such as C.I. Pigment Yellow 180, azo lake pigments such as C.I. Pigment Yellow 100, condensed azo pigments such as C.I. Pigment Yellow 95, acid dye lake pigments such as C.I. Pigment Yellow 115, basic dye lake pigments such as C.I. Pigment Yellow 18, anthraquinone-base pigments such as Flavanthrone Yellow, isoindolinone pigments such as Isoindolinone Yellow 3RLT and C.I. Pigment Yellow 139, quinophthalone pigments such as Quinophthalone Yellow, isoindoline pigments such as Isoindoline Yellow, nitroso pigments such as C.I. Pigment Yellow 153, and metal complex salt azomethine pigments such as C.I. Pigment Yellow 117.

Examples of the pigment for magenta ink include monoazo-base pigments such as C.I. Pigment Red 3, disazo pigments such as C.I. Pigment Red 38, azo lake pigments such as C.I. Pigment Red 53:1 and C.I. Pigment Red 57:1, condensed azo pigments such as C.I. Pigment Red 144, acid dye lake pigments such as C.I. Pigment Red 174, basic dye lake pigments such as Pigment Red 81, anthraquinone-base pigments such as C.I. Pigment Red 177, thioindigo pigments such as C.I. Pigment Red 88, perynone pigments such as C.I. Pigment Red 194, perylene pigments such as C.I. Pigment Red 149, quinacridone pigments such as C.I. Pigment Red 122, isoindolinone pigments such as C.I. Pigment Red 180, and alizarin lake pigments such as C.I. Pigment Red 83.

Examples of the pigment for cyan ink include disazo-base pigments such as C.I. Pigment Blue 25, phthalocyanine pigments such as C.I. Pigment Blue 15, acid dye lake pigments such as C.I. Pigment Blue 24, basic dye lake pigments such as Pigment Blue 1, anthraquinone-base pigments such as C.I. Pigment Blue 60, and alkali blue pigments such as C.I. Pigment Blue 18.

Examples of the pigment for black ink include organic pigments such as aniline black-base pigment, iron oxide pigments, and carbon black pigments such as furnace black, lamp black, acetylene black and channel black.

Furthermore, processed pigments represented by microlith pigments such as microlith-A, microlith-K and microlith-T can also be suitably used. Specific examples thereof include Micolith Yellow 4G-A, Microlith Red BP-K, Microlith Blue 4G-T and Microlith Black C-T.

In addition, various pigments can be used, if desired, for example, calcium carbonate and titanium oxide may be used as the pigment for white ink, aluminum powder may be used as the pigment for silver ink, and copper alloy may be used as the pigment for gold ink.

In view of easiness in the production of ink, it is fundamentally preferred to use one pigment for one color. However, depending on the case, two or more pigments are preferably used in combination for adjusting the color hue, for example, phthalocyanine is mixed with carbon black for the preparation of black ink. Also, the pigment may be used after surface-treating it by a known method such as rosin treatment (see, Non-Patent Document 1, *supra*).

The pigment content is from 0.1 to 50 wt% based on the entire ink composition. With a pigment content of 0.1 wt% or more, the amount of pigment is satisfied and satisfactory color formation can be obtained in the printed matter and with a pigment content of 50 wt% or less, coloring material-containing particles can be successfully dispersed in the dispersion medium. The pigment content is more preferably from 1 to 30 wt%.

### [Covering Agent]

In the present invention, the coloring material such as pigment is dispersed (formed into particles) in a state of being covered with a covering agent than the direct dispersion (formation of particles) in the dispersion medium. By covering the coloring material with a covering agent, the electric charge of the coloring material is masked and preferred charging property can be imparted. Furthermore, the difference in the dispersion stability which varies according to the kind of the coloring material can be eliminated and the same dispersion stability can be imparted. Furthermore, in the present invention, the ink after inkjet recording on a recording medium is preferably fixed by a heating device such as heat roller and at this time, the covering agent is melted due to heat, thereby realizing efficient fixing.

Examples of the covering agent include rosins, phenol resin, rosin-modified phenol resin, alkyd resin, (meth)acryl-base polymer, polyurethane, polyester, polyether, polyamide, polyethylene, polybutadiene, polystyrene, polyvinyl acetate, acetal-modified product of polyvinyl alcohol, and polycarbonate. Among these, in view of easiness of particle formation, polymers having a weight average molecular weight of 2,000 to 1,000,000 and a polydispersion degree (weight average molecular weight/number average molecular weight) of 1.0 to 5.0 are preferred. Furthermore, in view of easiness of fixing, polymers where any one of the softening point, the glass transition point and the melting point is from 40 to 120°C are preferred.

The polymer which is used as the covering agent in the present invention is a polymer containing any one of the constituent units represented by the following formula (1) to (4). 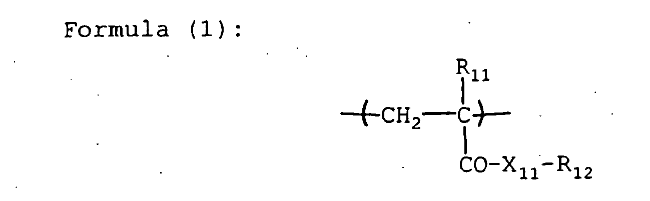 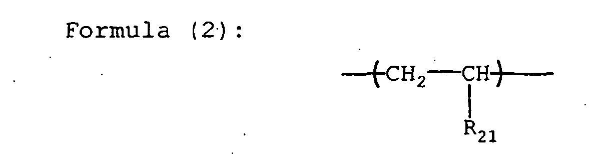 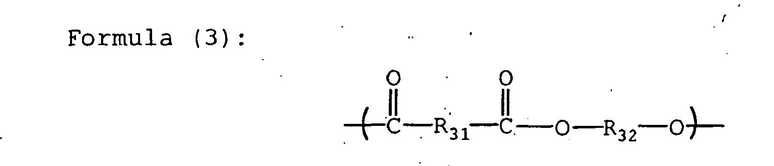 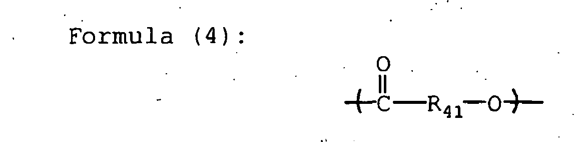 wherein X₁₁ represents an oxygen atom or -N (R₁₃) -, R₁₁ represents a hydrogen atom or a methyl group, R₁₂ represents a hydrocarbon group having from 1 to 30 carbon atoms, R₁₃ represents a hydrogen atom or a hydrocarbon group having from 1 to 30 carbon atoms, R₂₁ represents a hydrogen atom or a hydrocarbon group having from 1 to 20 carbon atoms, and R₃₁, R₃₂ and R₄₁ each independently represents a divalent hydrocarbon group having from 1 to 20 carbon atoms, provided that the hydrocarbon groups of R₁₂, R₂₁, R₃₁, R₃₂ and R₄₁ each may contain an ether bond, an amino group, a hydroxy group or a halogen-substituted group.

The polymer containing the constituent unit represented by formula (1) can be obtained by radical-polymerizing a corresponding radical polymerizable monomer according to a known method. Examples of the radical polymerizable monomer used include (meth)acrylic acid esters such as methyl (meth)acrylate, ethyl (meth)acrylate, propyl (meth)acrylate, butyl (meth)acrylate, hexyl (meth)-acrylate, octyl (meth)acrylate, 2-ethylhexyl (meth)acrylate, dodecyl (meth)acrylate, stearyl (meth)acrylate, cyclohexyl (meth)acrylate, phenyl (meth) acrylate, benzyl (meth)-acrylate and 2-hydroxyethyl (meth)acrylate, and (meth)acrylamides such as N-methyl(meth)acrylamide, N-propyl(meth)acrylamide, N-phenyl(meth)acrylamide and N,N-dimethyl(meth)acrylamide.

The polymer containing the constituent unit represented by formula (2) can be obtained by radical-polymerizing a corresponding radical polymerizable monomer according to a known method. Examples of the radical polymerizable monomer used include ethylene, propylene, butadiene, styrene and 4-methylstyrene.

The polymer containing the constituent unit represented by formula (3) can be obtained by dehydration-condensing a corresponding dicarboxylic acid or acid anhydride and a diol according to a known method. Examples of the dicarboxylic acid used include succinic anhydride, adipic acid, sebacic acid, isophthalic acid, terephthalic acid, 1,4-phenylenediacetic acid and diglycol. Examples of the diol used include ethylene glycol, 1,2-propanediol, 1,3-propanediol, 1,4-butanediol, 1,6-hexanediol, 1,10-decanediol, 2-butene-1,4-diol, 1,4-cyclohexanediol, 1,4-cyclohexanedimethanol, 1,4-benzenedimethanol and diethylene glycol.

The polymer containing the constituent unit represented by formula (4) can be obtained by dehydration-condensing a carboxylic acid having a corresponding hydroxy group according to a known method or by ring-opening polymerizing a cyclic ester of a carboxylic acid having a corresponding hydroxy group according to a known method. Examples of the carboxylic acid having a hydroxyl group or the cyclic ester thereof used include 6-hydroxyhexanoic acid, 11-hydroxyundecanoic acid, hydroxybenzoic acid and ε-caprolactone.

The polymer containing at least any one of the constituent units represented by formulae (1) to (4) may be a homopolymer of the constituent unit represented by formula (1), (2), (3) or (4) or may be a copolymer with another constituent component. As the covering agent, these polymers may used individually or in combination of two or more thereof.

The covering agent content is from 0.1 to 40 wt% based on the entire ink composition. With a covering agent content of 0.1 wt% or more, the amount of the covering agent is satisfied and sufficiently high fixing property can be obtained and with a covering agent content of 40 wt% or less, a particle containing a coloring material and a covering agent can be successfully formed.

### [Dispersant]

In the present invention, a mixture of the coloring material and the covering agent is dispersed (formed into particles) in a dispersion medium and for controlling the particle diameter and preventing the precipitation of particles, a dispersant is used.

Suitable examples of the dispersant include surfactants represented by sorbitan fatty acid esters such as sorbitan monooleate, and polyethylene glycol fatty acid esters such as polyoxyethylene distearate. Other examples include a copolymer of styrene and maleic acid, an amine-modified product thereof, a copolymer of styrene and (meth)acryl compound, a (meth)acryl-base polymer, a copolymer of polyethylene and (meth)acryl compound, rosin, BYK-160, 162, 164, 182 (polyurethane-base polymers produced by Byk-Chemie), EFKA-401, 402 (acryl-base polymers produced by EFKA), and Solsperse 17000, 24000 (polyester-base polymers produced by Zeneca). In the present invention, in view of long-term storage stability of the ink composition, a polymer having a weight average molecular weight of 1,000 to 1,000,000 and a polydispersion degree (weight average molecular weight/number average molecular weight) of 1.0 to 7.0 is preferred, and a graft polymer or a block polymer is most preferred.

The polymer which is used in the present invention is a graft polymer comprising at least a polymer component containing at least either one of the constituent units represented by the following formulae (5) and (6), and a polymer component containing a constituent unit represented by the following formula (7) at least as a graft chain. 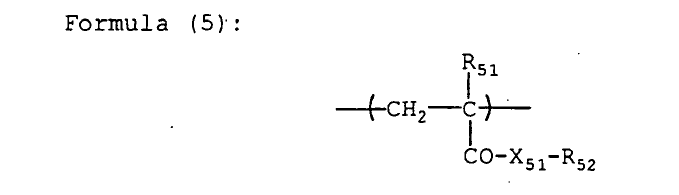 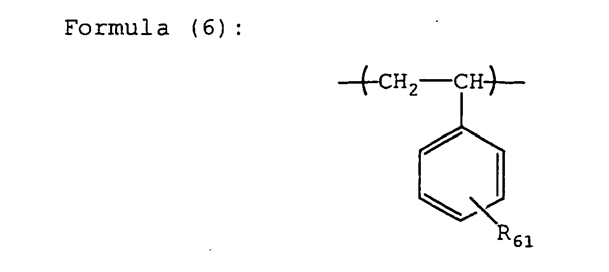 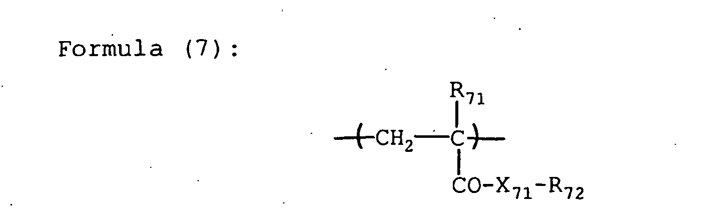 wherein X₅₁ represents an oxygen atom or -N (R₅₃) -, R₅₁ represents a hydrogen atom or a methyl group, R₅₂ represents a hydrocarbon group having from 1 to 10 carbon atoms, R₅₃ represents a hydrogen atom or a hydrocarbon group having from 1 to 10 carbon atoms, R₆₁ represents a hydrogen atom, a hydrocarbon group having from 1 to 20 carbon atoms, a halogen atom, a hydroxyl group or an alkoxy group having from 1 to 20 carbon atoms, X₇₁ represents an oxygen atom or -N(R₇₃)-, R₇₁ represents a hydrogen atom or a methyl group, R₇₂ represents a hydrocarbon group having from 4 to 30 carbon atoms, and R₇₃ represents a hydrogen atom or a hydrocarbon group having from 1 to 30 carbon atoms, provided that the hydrocarbon groups of R₅₂ and R₇₂ each may contain an ether bond, an amino group, a hydroxy group or a halogen-substituted group.

The above-described graft polymer can be obtained by polymerizing a radical polymerizable monomer corresponding to formula (7) preferably in the presence of a chain transfer agent, introducing a polymerizable functional group into the terminal of the polymer obtained, and copolymerizing the polymer with a radical polymerizable monomer corresponding to formula (5) or (6).

Examples of the radical polymerizable monomer corresponding to formula (5) include (meth)acrylic acid esters such as methyl (meth)acrylate, ethyl (meth)acrylate, propyl (meth)acrylate, butyl (meth)acrylate, hexyl (meth)-acrylate, cyclohexyl (meth)acrylate, phenyl (meth)acrylate, benzyl (meth)acrylate and 2-hydroxyethyl (meth)acrylate, and (meth)acrylamides such as N-methyl(meth)acrylamide, N-propyl (meth)acrylamide, N-phenyl(meth)acrylamide and N,N-dimethyl(meth)acrylamide.

Examples of the radical polymerizable monomer corresponding to formula (6) include styrene, 4-methylstyrene, chlorostyrene and methoxystyrene. Also, examples of the radical monomer corresponding to formula (6) include hexyl (meth)acrylate, octyl (meth)acrylate, 2-ethylhexyl (meth)acrylate, dodecyl (meth)acrylate, stearyl (meth)-acrylate.

The graft polymer comprising a polymer component containing at least either one of the constituent units represented by formulae (5) and (6) and a polymer component containing a constituent unit represented by formula (7) at least as a graft chain may have only the constituent units represented by formula (5) and/or (6) and formula (7) or may contain another constituent component. The compositional ratio of the polymer component having a graft chain and other polymer component is preferably from 10:90 to 90:10. Within this range, good particle-forming property is obtained and a desired particle diameter is advantageously easy to obtain. As the dispersant, these polymers may be used individually or in combination of two or more thereof.

In the present invention, the following graft polymer (may be referred as "graft polymer A" hereinafter) is still more preferably used as a dispersant, in view of stably and constantly ejecting a ink droplet in a long-period ink jet recording. The graft polymer A for use in the present invention is preferably a polymer having a weight average molecular weight of 1,000 or more and containing, as a side chain, a graft chain which is a polymer component having a weight average molecular weight of 500 or more. The graft polymer A particularly preferred as the dispersant is a polymer where the main chain moiety is not dissolved in the dispersion medium and the side chain moiety (graft chain) is dissolved in the dispersion medium.

The term "the main chain moiety is not dissolved in the dispersion medium" means that a polymer constituted only by a main chain part and having no side chain part is not dissolved in the dispersion medium. Specifically, this polymer preferably has a solubility of 3 g or less in 100 g of the dispersion medium.

The term "the side chain moiety is dissolved in the dispersion medium" means that a polymer constituted only by a side chain part and having no main chain part is dissolved in the dispersion medium. Specifically, this polymer preferably has a solubility of 5 g or more in 100 g of the dispersion medium.

The graft polymer where the main chain part is not dissolved and the side chain part is dissolved, is dissolved or dispersed in the dispersion medium while changing the transparent state into a white turbid state. When such a graft polymer is used, the main chain part is not dissolved in the dispersion medium and strongly adsorbs to the charged particle, whereas the side chain part is dissolved in the dispersion medium and thereby increased in the affinity for the dispersion medium, as a result, the dispersibility of charged particles in the dispersion medium is enhanced.

The graft polymer A which can be suitably used in the present invention is a polymer having a weight average molecular weight of 1,000 or more and containing at least a constituent unit represented by the following formula (8) and a constituent unit represented by the following formula (9) : 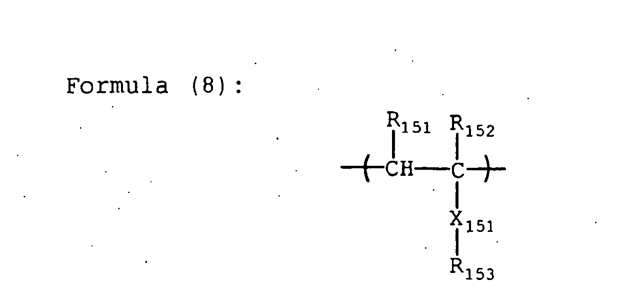 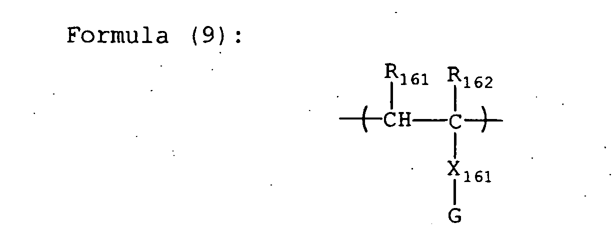 wherein
R₁₅₁, R₁₅₂, R₁₆₁ and R₁₆₂, which may be the same or different, each represents a hydrogen atom or a methyl group,
R₁₅₃ represents a hydrogen atom or a hydrocarbon group having from 1 to 30 carbon atoms, which may have a substituent, provided that the hydrocarbon group represented by R₁₅₃ may contain an ether bond, an ester bond, an amide bond, a carbamate bond, a hydroxyl group, or a halogen-substituted group,
X₁₅₁ and X₁₆₁, which may be the same or different, each represents a single bond or a divalent linking group having a total atom number of 50 or less and comprising two or more atoms selected from C, H, N, O, S and P, and
G represents a polymer component having a weight average molecular weight of 500 or more and containing at least the constituent unit represented by the following formula (10), or a polydimethylsiloxane group having a weight average molecular weight of 500 or more: 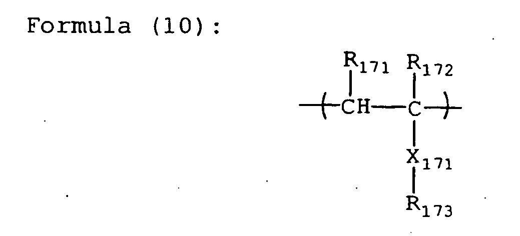 wherein
R₁₇₁ and R₁₇₂, which may be the same or different, each represents a hydrogen atom or a methyl group,
R₁₇₃ represents a hydrogen atom or a hydrocarbon group having from 1 to 30 carbon atoms, provided that the hydrocarbon group represented by R₁₇₃ may contain an ether bond, an ester bond, an amide bond, a carbamate bond, an amino group, a hydroxyl group or a halogen-substituted group, and
X₁₇₁ represents a single bond or a divalent linking group having a total atom number of 50 or less and comprising two or more atoms selected from C, H, N, O, S and P.

In view of stability of ink ejection, the total atom number of R₁₇₃ is preferably larger than the total atom number of R₁₅₃.

The graft polymer containing at least a constituent unit represented by formula (8) and a constituent unit represented by formula (9), which is suitably used in the present invention, can be obtained by polymerizing a radical polymerizable monomer corresponding to formula (8) and a radical polymerizable macromonomer corresponding to formula (9) by using a known radical polymerization initiator. The monomer corresponding to formula (8) is a monomer represented by the following formula (8M) and the macromonomer corresponding to formula (9) is a macromonomer represented by the following formula (9M): 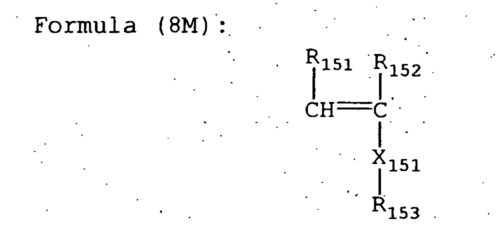 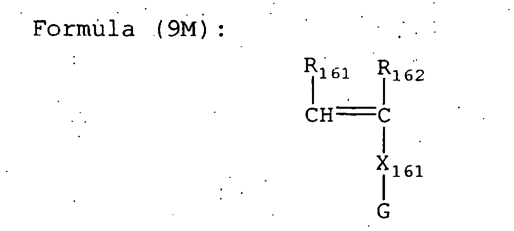 wherein each symbol has the same meaning as in formulae (8) and (9).

Examples of the monomer represented by formula (8M) include (meth)acrylic acid esters such as methyl (meth)-acrylate, ethyl (meth)acrylate, propyl (meth)acrylate, butyl (meth)acrylate, hexyl (meth)acrylate, octyl (meth)-acrylate, 2-ethylhexyl (meth)acrylate, cyclohexyl (meth)-acrylate, dodecyl (meth)acrylate, stearyl (meth) acrylate, phenyl (meth)acrylate, benzyl (meth)acrylate, 2-methoxyethyl (meth)acrylate and 2-hydroxyethyl (meth)acrylate, (meth)acrylamides such as N-methyl(meth)acrylamide, N-propyl(meth)acrylamide, N-phenyl(meth)acrylamide and N,N-dimethyl(meth)acrylamide, styrenes such as styrene, methylstyrene, chlorostyrene and methoxystyrene, hydrocarbons such as 1-butene, vinyl acetates, vinyl ethers and vinylpyridines.

The macromonomer represented by formula (9M) is a polymer having a radical polymerizable functional group at the terminal, which is obtained by polymerizing a radical polymerizable monomer corresponding to formula (10) and represented by the following formula (10M), if desired, in the presence of a chain transfer agent and then introducing a radical polymerizable functional group into the terminal of the polymer obtained.

The macromonomer represented by formula (9M) is preferably a macromonomer having a weight average molecular weight of 500 to 500,000 and a polydispersion degree (weight average molecular weight/number average molecular weight) of 1.0 to 7.0. The macromonomer represented by formula (9M) may be a polydimethylsiloxane having a radical polymerizable functional group at the terminal. 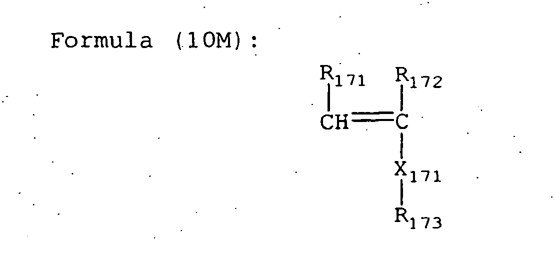 wherein each symbol has the same meaning as in formula (10).

Examples of the monomer represented by formula (10M) include (meth)acrylic acid esters such as methyl (meth)-acrylate, ethyl (meth) acrylate, propyl (meth)acrylate, butyl (meth) acrylate, hexyl (meth) acrylate, octyl (meth)-acrylate, 2-ethylhexyl (meth) acrylate, cyclohexyl (meth)-acrylate, dodecyl (meth) acrylate, stearyl (meth)acrylate, phenyl (meth)acrylate, benzyl (meth)acrylate and 2-hydroxyethyl (meth)acrylate, (meth)acrylamides such as N-methyl(meth)acrylamide, N-propyl(meth)acrylamide, N-phenyl(meth)acrylamide and N,N-dimethyl(meth)acrylamide, styrenes such as styrene, methylstyrene, chlorostyrene and methoxystyrene, hydrocarbons such as 1-butene, vinyl acetates, vinyl ethers and vinylpyridines.

The graft polymer A for use in the present invention may have only the constituent units represented by formulae (8) and (9) or may contain another constituent component. Specific examples of the graft polymer A, which is suitably used in the present invention include Polymers [BZ-1] to [BZ-8] represented by the following structural formulae. 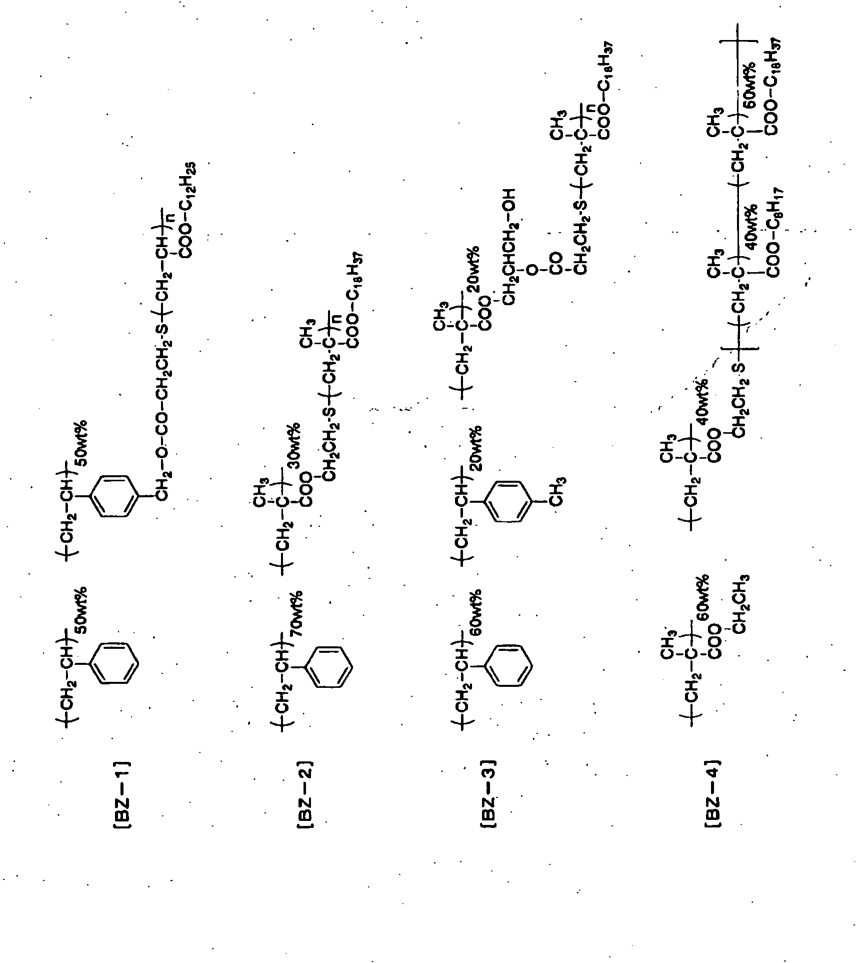 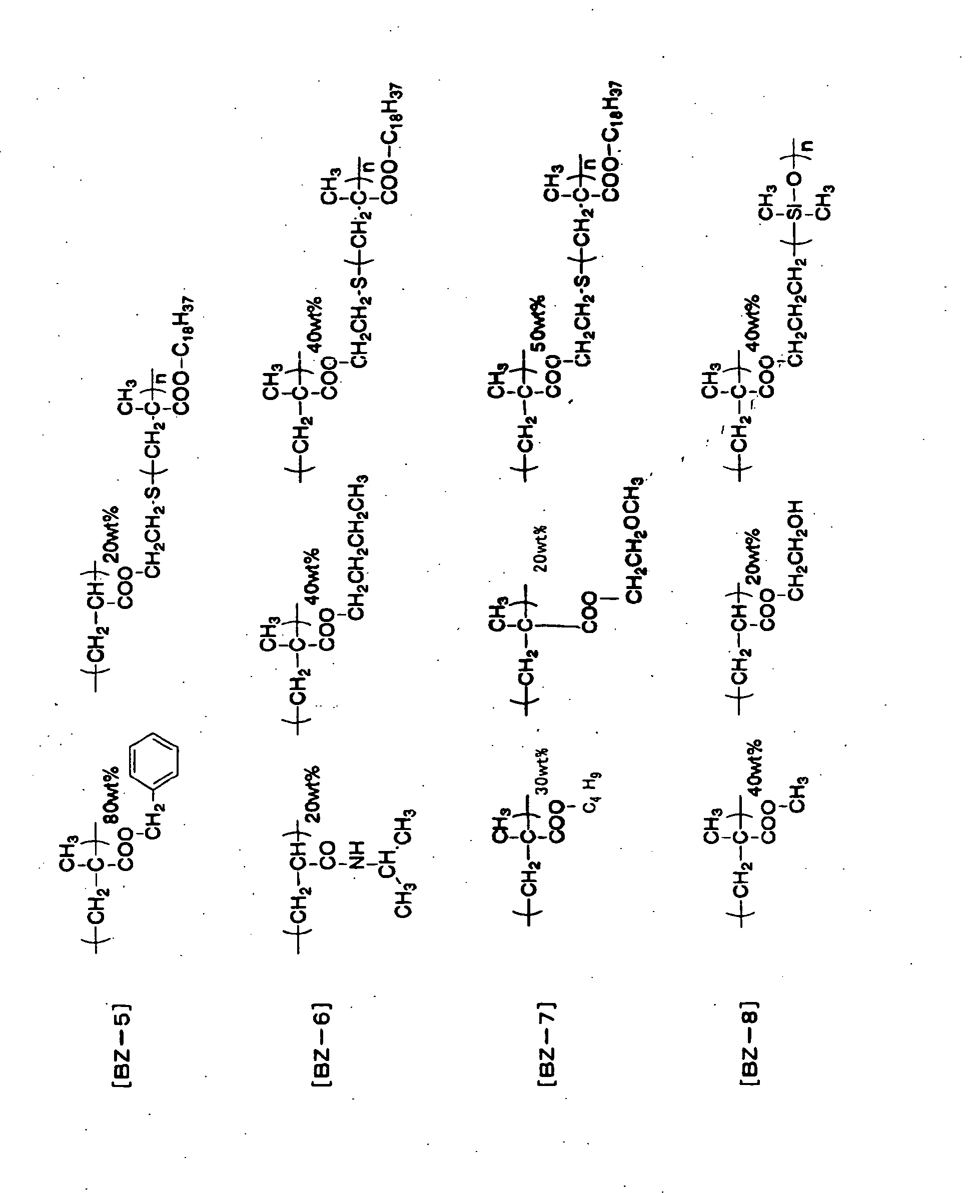 (in formulae, n shows that the compound is a polymer, and for example, is a number of 5 or more).

The term "the main chain moiety is not dissolved in the dispersion medium" means, for example, that the polymer not containing the constituent unit represented by formula (9) has a solubility of 3 g or less in 100 g of the dispersion medium, and the term "the side chain moiety is dissolved in the dispersion medium" means that the polymer represented by G in formula (9) or the macromonomer represented by formula (9M) has a solubility of 5 g or more in 100 g of the dispersion medium.

In the present invention, in view of long-term storage stability and ink ejection stability of the ink composition, the dispersant is preferably a graft polymer A having a weight average molecular weight of 1,000 to 1,000,000 and a polydispersion degree (weight average molecular weight/number average molecular weight) of 1.0 to 7.0.

The weight average molecular weight of the graft polymer A is preferably 1.5 times or more the weight average molecular weight of the graft chain (preferably the macromer component represented by formula (10)).

The mass ratio of the unit constituting the main chain and the unit constituting the graft chain is preferably from 30:70 to 95:5. As the dispersant, these polymers may be used individually or in combination of two or more thereof.

The dispersant content is from 0.01 to 30 wt% based on the entire ink composition. Within this range, good particle-forming property and a desired particle diameter can be obtained. In addition, within this range, ink particles are not aggregated in the ink ejection head or circulating pump, thereby preventing the head or pump from clogging, and a desired particle diameter can be obtained to facilitate the ejection at the inkjet recording.

### [Charge-Control Agent]

In the present invention, a mixture of a coloring material and a covering agent is dispersed (formed into particles) in a dispersion medium by using a dispersant and for controlling the electric charge amount of the particle by using a charge-control agent in combination.

Suitable examples of the charge-control agent include metal salts of organic carboxylic acid, such as zirconium naphthenate and zirconium octenate, ammonium salts of organic carboxylic acid, such as tetramethylammonium stearate, metal salts of organic sulfonic acid, such as sodium dodecylbenzenesulfonate and magnesium dioctylsulfosuccinate, ammonium salts of organic sulfonic acid, such as tetrabutylammonium toluenesulfonate, polymers having a carboxylic acid group in the side chain, such as carboxylic acid group-containing polymer obtained by modifying a copolymer of styrene and maleic anhydride with amine, polymers having a carboxylic acid anion group in the side chain, such as copolymer of stearyl methacrylate and tetramethylammonium salt of methacrylic acid, polymers having a nitrogen atom in the side chain, such as copolymer of styrene and vinylpyridine, and polymers having an ammonium group in the side chain, such as copolymer of butyl methacrylate and N-(2-methacryloyloxyethyl)-N,N,N-trimethylammonium tosylate. The electric charge imparted to the particle may be a positive electric charge or a negative electric charge. The charge control agent content is from 0.0001 to 10 wt% based on the entire ink composition. Within this range, the electric conductivity of the ink composition can be easily adjusted to the range from 10 to 300 nS/m and also, the electric conductivity of the charged particle can be easily adjusted to 50% or more of the electric conductivity of the ink composition.

### [Other Components]

In the present invention, for example, an antiseptic for preventing putrefaction and a surfactant for controlling the surface tension can be further contained according to the purpose.

### [Preparation of Charged Particle]

The ink composition containing a charged particle of the present invention can be prepared by using these components and dispersing (particle-forming) the coloring material and preferably the covering agent. Examples of the dispersing (particle-forming) method include the followings:
(1) the coloring material and the covering agent are previously mixed and then dispersed (formed into particles) by using the dispersant and the dispersion medium and thereto, the charge-control agent is added,
(2) the coloring material, the covering agent, the dispersant and the dispersion medium are simultaneously used and dispersed (formed into particles) and thereto, the charge-control agent is added, and
(3) the coloring material, the covering agent, the dispersant, the charge-control agent and the dispersion medium are simultaneously used and dispersed (formed into particles).

Examples of the device used for the mixing or dispersion include kneader, dissolver, mixer, high-speed disperser, sand mill, roll mill, ball mill, attritor and bead mill (see, Non-Patent Document 1, *supra*).

### [Inkjet Recording Apparatus]

In the present invention, the above-described ink composition is used for recording an image on a recording medium by an inkjet recording system. In the present invention, an inkjet recording system utilizing an electrostatic field is preferably employed. The inkjet recording system utilizing an electrostatic field is a system where a voltage is applied between a control electrode and a back electrode on the back surface of a recording medium, as a result, the charged particles in the ink composition are concentrated at the ejection site by the electrostatic force and flown to a recording medium from the ejection site. In applying a voltage between a control electrode and a back electrode, for example, when the charged particle is positive, the control electrode serves as the positive electrode and the back electrode serves as the negative electrode. The same effect can be obtained also by electrifying the recording medium instead of applying a voltage to the back electrode.

The ink spraying system include, for example, a system of spraying an ink from a needle-like tip such as injection needle and by using the ink composition of the present invention, recording can be performed. However, after charged particles are concentrated and ejected, the charged particle is difficult to supply and stable recording can be hardly performed for a long period of time. If the ink is circulated to enforcedly supply the charged particle, the ink overflows from the injection needle-like tip and the meniscus shape at the injection needle-like tip as the ejection site is not stabilized, as a result, the recording cannot be stably performed. Therefore, this system is suitable for short-term recording.

On the other hand, a method of circulating an ink composition without causing the ink composition to overflow from the ejection opening is preferably used. For example, in a method where an ink is circulated in an ink chamber having an ejection opening and when a voltage is applied to a control electrode formed in the periphery of the ejection opening, a concentrated ink droplet flies from the tip of an ink guide present in the ejection opening and having a tip facing the recording medium side, supply of charged particles by the circulation of ink and meniscus stability of the ejection site both can be established at the same time and therefore, the recording can be stably performed for a long period of time. Furthermore, in this system, the portion of the ink coming into contact with an outside air is only the ejection opening and is very small, so that the solvent can be prevented from evaporation and the physical properties of ink can be stabilized. Therefore, this system can be suitably used in the present invention.

A constitution example of the inkjet recording apparatus to which the ink composition of the present invention is suitably applied is described below.

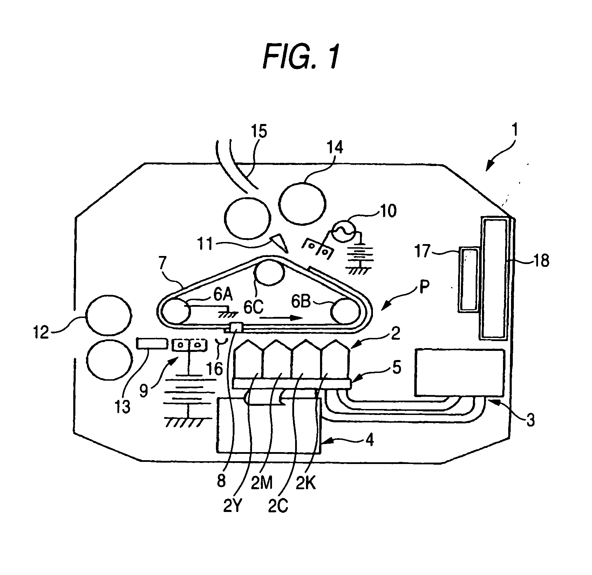

An apparatus of performing one-side four-color printing on a recording medium, shown in Fig. 1, is briefly described below.

The inkjet recording apparatus 1 shown in Fig. 1 comprises an ink circulating system 3 which supplies an ink to an ejection head 2 constituted by ejection heads 2C, 2M, 2Y and 2K of four colors for performing the formation of a full color image and further recovers the ink from the ejection head 2, a head driver 4 for driving the ejection head 2 by the output from an external device (not shown) such as computer and RIP, and position controlling means 5. Furthermore, the inkjet recording apparatus 1 comprises a conveyance belt 7 strained by three rollers 6A, 6B and 6C, conveyance belt position-detecting means 8 constituted by an optical sensor or the like capable of detecting the position in the cross direction of the conveyance belt 7, electrostatic adsorption means 9 for holding a recording medium P on the conveyance belt, and destaticizing means 10 and dynamic means 11 for separating the recording medium P from the conveyance 7 after the completion of image formation. Upstream and downstream the conveyance belt 7, a feed roller 12 and a guide 13 for feeding the recording medium P to the conveyance belt 7 from a stocker (not shown), and fixing means 14 and a guide 15 for fixing the ink on the recording medium P separated and at the same time, conveying the recording medium to a discharged paper stocker are disposed. Also, in the inside of the inkjet printing apparatus 1, recording medium position-detecting means 16 is disposed at the position opposing the ejection head 2 through the conveyance belt 7, a solvent recovery part for recovering solvent vapor generated from the ink composition, comprising a ventilating fan 17 and a solvent vapor adsorbent 18, is disposed and the vapor inside the apparatus is discharged to the outside of the apparatus through the recovery part.

The feed roller 12 can be a known roller and is disposed to enhance the feeding ability for the recording medium. On the recording medium P, dirt, paper dust and the like are sometimes attached and these are preferably removed. The recording medium P fed by the feed roller is conveyed to the conveyance belt 7 through the guide 13. The back surface (preferably metal back surface) of the conveyance belt 7 is placed through a roller 6A. The recording medium conveyed is electrostatically adsorbed on the conveyance belt by the electrostatic adsorption means 9. In Fig. 1, the electrostatic adsorption is performed by a scorotron charger connected to a negative high voltage power source. By the electrostatic adsorption means 9, the recording medium 9 is electrostatically adsorbed on the conveyance belt 7 without floating and at the same time, the recording medium surface is uniformly electrified. In this example, the electrostatic adsorption means is used also as the electrification means for the recording medium, but the electrification means may be provided separately. The electrified recording medium P is conveyed to the ejection head part by the conveyance belt 7 and recording signal voltages are superposed while using the electrification potential as a bias, whereby an electrostatic inkjet image is formed. The recording medium P having formed thereon an image is destaticized by the destaticizing means 10, separated from the conveyance belt 7 by the dynamic means 11 and conveyed to the fixing part. The recording medium P separated is transferred to the image fixing means 14 and the image is fixed. The recording medium P after fixing is discharged to a discharged paper stocker (not shown) through the guide 15. This apparatus also has means for recovering solvent vapor generated from the ink composition. The recovery means comprises a solvent vapor absorbent 18 and the gas containing solvent vapor in the apparatus is introduced into the adsorbent by the ventilating fan 17 and after adsorbing and recovering the vapor, discharged outside the apparatus. The inkjet recording apparatus is not limited to this example, but the number, shape, relative disposition, charged polarity and the like of constituent devices such as roller and charger can be arbitrarily selected. Furthermore, the system is described here by referring to the drawing of a four-color image, but a system of drawing an image having more colors by using a light color ink or a special color ink in combination may be employed.

The inkjet recording apparatus for use in the above-described inkjet printing method comprises an ejection head 2 and an ink circulating system 3 and furthermore, the ink circulating system 3 has an ink tank, an ink circulating device, an ink concentration-controlling device, an ink temperature-controlling device and the like. In the ink tank, a stirring device may be contained.

The ejection head 2 may be a single channel head, a multi-channel head or a full line head and the main scanning is performed by the rotation of a conveyance belt 7.

The inkjet head which is suitably used in the present invention performs the inkjet recording by electrophoresing charged particles in the ink flow path to increase the ink concentration in the vicinity of the opening and thereby ejecting an ink droplet, where the ink droplet is ejected by an electrostatic suction force mainly ascribable to the recording medium or the opposing electrode disposed on the back surface of the recording medium. Therefore, in the case where the recording medium or opposing electrode is not facing the head or even if facing the head, a voltage is not applied to the recording medium or opposing electrode, an ink droplet is not ejected even when a voltage is applied by mistake to the ejection electrode or vibration is applied, and the inside of the apparatus is not stained.

Figs. 2 and 3 show an ejection head which is suitably used for the above-described inkjet apparatus. As shown in Figs. 2 and 3, the inkjet head 70 comprises an electrically insulating substrate 74 constituting the top wall of an ink flow path 72 where a one-way ink flow Q is formed, and a plurality of ejection parts 76 of ejecting an ink toward a recording medium P. In all of the ejection parts 76, an ink guide part 78 of guiding an ink droplet G spraying from the ink flow path 72 toward the recording medium P is provided. In the substrate 74, openings 75 each for allowing the ink guide part 78 to penetrate are formed and an ink meniscus 42 is formed between the ink guide part 78 and the inner wall surface of the opening 75. The gap d between the ink guide part 78 and the recording medium P is preferably on the order of 200 to 1,000 µm. The ink guide part 78 is fixed in its lower end side to a supporting rod part 40.

The substrate 74 has an insulating layer 44 of separating two ejection electrodes at a predetermined distance and thereby establishing electrical insulation, a first ejection electrode 46 formed on the top side of the insulating layer 44, an insulating layer 48 covering the first ejection electrode 46, a guard electrode 50 formed on the top side of the insulating layer 48, and an insulating layer 52 covering the guard electrode 50. Furthermore, the substrate 74 has a second ejection electrode 56 formed on the bottom side of the insulating layer 44 and an insulating layer 58 covering the second ejection electrode 56. The guard electrode 50 is provided for preventing adjacent ejection parts from being affected in view of electric field by the voltage applied to the first ejection electrode 46 or the second ejection electrode 56.

Furthermore, in the inkjet head 70, a floating conductive plate 62 is provided in the electrically floating state, which constitutes the bottom surface of the ink flow path 72 and at the same time, drifts positively charged ink particles (charged particles) R in the ink flow path 72 toward the upper side (namely, toward the recording medium side) by using an induced voltage constantly generated due to the pulsed ejection voltage applied to the first ejection electrode 46 and the second ejection electrode 56. On the surface of the floating conductive plate 62, an electrically insulating covering film 64 is formed to prevent the physical properties or components of the ink from becoming unstable as a result of, for example, injection of electric charge into the ink. The electric resistance of the insulating covering film is preferably 10¹² Ω · cm or more, more preferably 10¹³ Ω · cm or more. Also, the insulating covering film is preferably corrosion-resistant against ink and by virtue of this resistance, the floating conductive plate 62 can be prevented from corrosion by the ink. Furthermore, the bottom side of the floating conductive plate 62 is covered by an insulating member 66 and by virtue of such a constitution, the floating conductive plate 62 is completely in an electrically insulated state.

One or more floating conductive plate 62 is provided per one head unit (for example, when C, M, Y and K four heads are present, each head has at least one floating conductive plate and a floating conductive plate is not commonly used between C and M head units).

For spraying an ink from the inkjet head 70 as shown in Fig. 3 and recording an image on the recording medium P, an ink flow Q is generated by circulating the ink in the ink flow path 72 and in this state, a predetermined voltage (for example, +100 V) is applied to the guard electrode 50. Also, a positive voltage is applied to the first ejection electrode 46, the second ejection electrode 56 and the recording medium P such that a spraying electric field high enough to cause positively charged particles R in the ink droplet G guided by the ink guide part 78 and flown from the opening 75 to gravitate to the recording medium P is formed between the first ejection electrode 46 and the recording medium P and between the second ejection electrode 56 and the recording medium P (as a standard, to form a potential difference of approximately from 1 to 3.0 kV when the gap d is 500 µm) .

In this state, when a pulse voltage is applied to the first ejection electrode 46 and the second ejection electrode 56 according to image signals, the ink droplet G elevated in the charged particle concentration is ejected from the opening 75 (for example, when the initial concentration of charged particles is from 3 to 15%, the charged particle concentration in the ink droplet G becomes 30% or more).

At this time, the voltage value applied to the first ejection electrode 46 and the second ejection electrode 56 is adjusted such that the ink droplet G is ejected only when a pulse voltage is applied to both the first ejection electrode 46 and the second ejection electrode 56.

When a pulsed positive voltage is applied, the ink droplet G guided by the ink guide part 78 is flown from the opening 75 and attached to the recording medium P and at the same time, a positive induced voltage is generated in the floating conductive plate 62 due to the positive voltage applied to the first ejection electrode 46 and the second ejection electrode 56. Even when the voltage applied to the first ejection electrode 46 and the second ejection electrode 56 is pulsed, the induced voltage is nearly a stationary voltage. Accordingly, the charged particles R positively charged in the ink flow path 72 are moved upward by the force of the electric field formed between the floating conductive plate 62 and the recording medium P and between the guard electrode 50 and the recording medium P, and the concentration of charged particles R increases in the vicinity of the substrate 74. As shown in Fig. 3, when a large number of ejection parts (that is, channels for ejecting an ink droplet) are used, the number of charged particles necessary for the ejection becomes large, but since the first ejection electrode 46 and the second ejection electrode 56 each is increased in the number of sheets used, the induced voltage generated in the floating conductive plate 62 is elevated and the number of charged particles R moving to the recording medium side increases.

In the example described above, the color particle is positively charged, but the color particle may be negatively charged and in this case, the charged polarities all are reversed.

In the present invention, the ink ejected on a recording medium is preferably fixed by appropriate heating means. Examples of the heating means which can be used include contact-type heating devices such as heat roller, heat block and belt heating, and non-contact type heating devices such as drier, infrared lamp, visible light lamp, ultraviolet lamp and hot air-type oven. Such a heating device is preferably continued to and integrated with the inkjet recording apparatus. The temperature of the recording medium at the fixing is preferably from 40 to 200°C in view of easiness of fixing. The fixing time is preferably from 1 micro-second to 20 seconds.

### [Replenishment of Ink Composition]

In the inkjet recording system utilizing an electrostatic field, the charged particles in the ink composition are concentrated and ejected. Accordingly, when the ink composition is ejected for a long period of time, the amount of charged particles in the ink composition decreases and the electric conductivity of the ink composition decreases. Also, the ratio between the electric conductivity of the charged particle and the electric conductivity of the ink composition changes. Furthermore, at the ejection, a charged particle having a large diameter tends to be more preferentially ejected than a charged particle having a small diameter and therefore, the average diameter of charged particles decreases. In addition, the content of solid matters in the ink composition changes and therefore, the viscosity also changes.

As a result of these changes in the physical values, ejection failure may occur, the optical density of recorded image may decrease or the bleeding of ink may be generated. By replenishing an ink composition having a higher concentration (the concentration of solid contents is higher) than the ink composition initially charged into the ink tank, the amount of charged particles can be prevented from decreasing and the electric conductivity of the ink composition and the ratio of the electric conductivity of the charged particle to the electric conductivity of the ink composition can be kept constant. Also, the average particle diameter and the viscosity can be maintained. Furthermore, by keeping constant the physical values of the ink composition, the ink is stably and uniformly ejected for a long period of time. The replenishment at this time is preferably performed mechanically or manually, for example, by detecting the physical values of the ink solution on use, such as electric conductivity and optical density, and calculating the shortfall. Also, the replenishment may be performed mechanically or manually by calculating the amount of the ink composition used, based on the image data.

### [Recording Medium]

In the present invention, various recording mediums can be used according to uses. For example, when paper, plastic film, metal, paper laminated or vapor-deposited with plastic or metal, plastic film laminated or vapor-deposited with metal, or the like is used, a printed matter can be directly obtained by the inkjet recording. Also, for example, when a support obtained by roughening the surface of a metal such as aluminum is used, an offset printing plate can be obtained. Furthermore, when a plastic support or the like is used, a color filter for flexographic printing plate or liquid crystal screen can be obtained. The recording medium may be have a planar shape such as sheet form, or may have a steric shape such as cylindrical form. When a silicon wafer or a circuit board is used as the recording medium, this can be applied to the production of a semiconductor or a printed circuit board.

### [Fixing]

In the present invention, the ink ejected on a recording medium is preferably fixed by appropriate heating means. Examples of the heating means which can be used include contact-type heating devices such as heat roller, heat block and belt heating, and non-contact type heating devices such as drier, infrared lamp, visible light lamp, ultraviolet lamp and hot air-type oven. Such a heating device is preferably connected and integrated with the inkjet recording apparatus.

By using the above-described ink composition of the present invention, an ink droplet can be stably ejected for a long period of time. Furthermore, by using the above-described inkjet recording apparatus, an image-recorded material free from bleeding of ink and having high image density and high image quality can be obtained over a long period of time. The factor contributing to these effects is not clearly known, but for example, these effects are presumed to result because the particles obtained by using a graft polymer A as the dispersant are stably present without undergoing aggregation due to shearing stress generated on the inner wall of head at the ejection of ink or concentration. Also, this factor is presumed to be attributable to the fact that the graft polymer A of the present invention has high adsorption strength to the covering agent or coloring material and at the same time, has high dissolving ability in a dispersion medium. Furthermore, the image-recorded materials (printed matters) after inkjet recording and fixing can be prevented from blocking even when these are superposed one on another, and this effect, the factor for which is also not clearly known, is presumed to result because the graft polymer A of the present invention has high affinity for the particle and at the same time, is low in the affinity for the back surface before the image is formed.

By combining the above-described ink composition, inkjet recording apparatus and replenishment of ink composition, an image-recorded material free from bleeding of ink and having high image density and high image quality can be stably obtained over a long period of times.

### Examples

The present invention is described in greater detail below by referring to Examples, however, the present invention is not limited thereto.

### [Example 1]

### <Materials Used>

In Example 1, the following materials were used.
Cyan pigment (coloring material):
phthalocyanine pigment C.I. Pigment Blue (15:3)
(Lionol Blue FG-7350, produced by Toyo Ink Mfg. Co., Ltd.)
Covering agent: [AP-1]
Dispersant: [BZ-2]
Charge-control agent: [CT-1]
Dispersion medium: Isoper G (produced by Exxon Corp.)

The structures of Covering Agent [AP-1], Dispersant [BZ-2] and Charge-Control Agent [CT-1] are shown below.

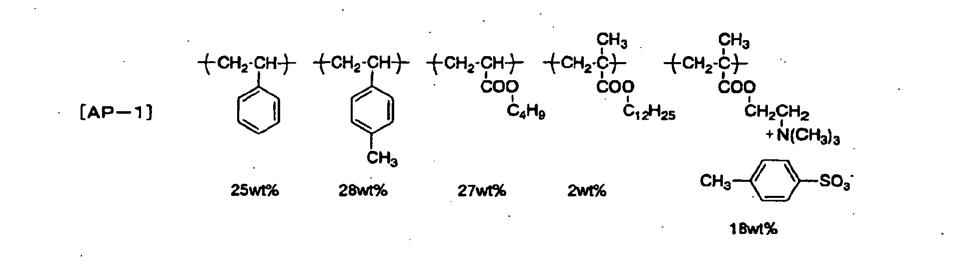

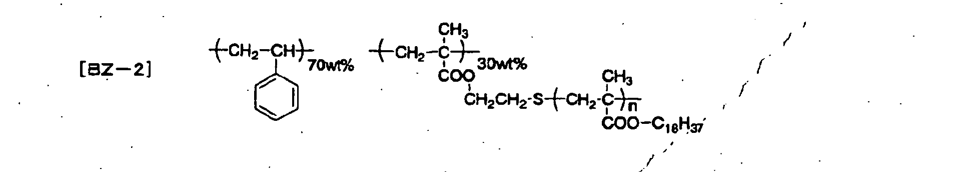

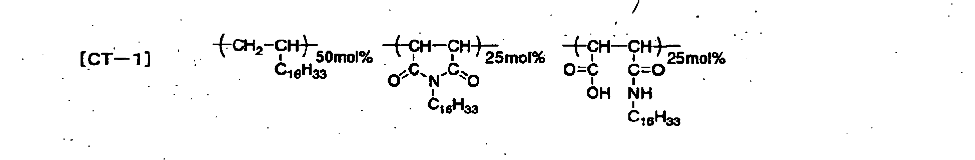

Covering Agent [AP-1] was obtained by radical-polymerizing styrene, 4-methylstyrene, butyl acrylate, dodecyl methacrylate and 2-(N,N-dimethylamino)ethyl methacrylate by using a known polymerization initiator, and further reacting the obtained polymer with methyl tosylate. The weight average molecular weight was 15,000, the polydispersion degree (weight average molecular weight number average molecular weight) was 2.7, the glass transition r point (midpoint) was 51°C, and the softening point as measured by a strain gauge method was 46°C.

Dispersant [BZ-2] was obtained by radical-polymerizing stearyl methacrylate in the presence of 2-mercaptoethanol, reacting the obtained polymer with methacrylic acid anhydride to obtain Polymer [BP-1] (weight average molecular weight: 7,600) of stearyl methacrylate, having a methacryloyl group at the terminal, and then radical-polymerizing this polymer with styrene. The weight average molecular weight was 110,000.

Polymer [BP-1] dissolved in an amount of 5 g or more per 100 g of Isoper G and Graft Polymer Dispersant [BZ-2] dissolved in an amount of 5 g or more per 100 g of Isoper G, though the solution became white turbid.

Charge-Control Agent [CT-1] was obtained by reacting 1-hexadecylamine with a copolymer of 1-octadecene and maleic anhydride. The weight average molecular weight was 17,000.

### <Preparation of Ink Composition [EC-1]>

A cyan pigment (10 g) and 20 g of Covering Agent [AP-1] were charged into a desktop kneader PBV-0.1 manufactured by Irie Shokai K.K. and mixed under heat for 2 hours by setting the heater temperature to 100°C. Then, 30 g of the obtained mixture was coarsely ground by Trio Blender manufactured by Trio Science K.K. and further finely ground by Model SK-M10 Sample Mill manufactured by Kyoritsu Riko K.K. Thereafter, 30 g of the resultant finely ground material was pre-dispersed together with 7.5 g of Dispersant [BZ-2], 75 g of Isoper G and glass beads having a diameter of about 3.0 mm in a paint shaker manufactured by Toyo Seiki Seisaku-Sho, Ltd. After removing glass beads, the pre-dispersion was dispersed (formed into particles) together with zirconia ceramic beads having a diameter of about 0.6 mm in Type KDL Dynomill manufactured by Shinmaru Enterprise K.K. at a rotation number of 2,000 rpm for 5 hours while keeping the inner temperature at 25°C and for another 5 hours at 45°C. After removing zirconia ceramic beads, 316 g of Isoper G and 0.6 g of Charge-Control Agent [CT-1] were added to the resultant dispersion to obtain Ink Composition [EC-1].

The physical values of Ink Composition [EC-1] were as follows.
(A) The electric conductivity at 20°C of the ink composition was measured at an applied voltage of 5 V and a frequency of 1 kHz by using an LCR meter (AG-4311, manufactured by Ando Electric Co., Ltd.) and an electrode for liquid (Model LP-05, manufactured by Kawaguchi Electric Works Co., Ltd.) and found to be 100 nS/m.
(B) The ink composition was centrifuged at a rotation number of 14,500 rpm and a temperature of 20°C for 30 minutes by using a compact high-speed cooling centrifuge (SRX-201, manufactured by Tomy Seiko Co., Ltd.) to precipitate charged particles and the electric conductivity of the supernatant was measured and found to be 30 nS/m. The electric conductivity of the charged particle was 70 nS/m and this was 70% of the electric conductivity of the ink composition. The electric charge of the charged particle was positive.
(C) The volume average diameter of charged particles was measured at a rotation number of 5,000 rpm by using CAPA-700 manufactured by Horiba Ltd. and found to be 0.9 µm. The number average diameter was 0.15 µm.
(D) The viscosity at 20°C of the ink composition was measured by an E-type viscometer manufactured by Tokyo Keiki Co., Ltd., using Cornplate type rotor at 100 rpm, and found to be 1.5 mPa·s. Furthermore, the surface tension at 20°C of the ink composition was measured by using a FACE automatic surface tension meter manufactured by Kyowa Interface Science Co., Ltd. and found to be 25 mN/m.

Ink Composition [EM-1] was obtained in the same manner as in the preparation of Ink Composition [EC-1] except that a magenta pigment C.I. Pigment Red 57:1 (Brilliant Carmine 6B, L.R 6B FG-4213, produced by Toyo Ink Mfg. Co., Ltd.) was used in place of the cyan pigment. Ink Composition [EY-1] was also obtained in the same manner except that a yellow pigment C.I. Pigment Yellow 180 (Toner Y HG, produced by Clariant K.K.) was used in place of the cyan pigment. Furthermore, Ink Composition [EB-1] was obtained in the same manner except that a black pigment C.I. Pigment Black 7 (Carbon Black MA-8, produced by Mitsubishi Chemical Corporation) was used in place of the cyan pigment. The physical values of each ink composition obtained are shown in Table 1. These are all in respective ranges of physical values specified in claim 1 of the present invention.

**TABLE 1**

| Ink Composition | | [EC-1] | [EM-1] | [EY-1] | [EB-1] |
|---|---|---|---|---|---|
| (A) | Electric conductivity of ink composition | 100 nS/m | 110 nS/m | 130 nS/m | 80 nS/m |
| (B) | Ratio of electric conductivity of charged particle | 70% (positive charge) | 75% (positive charge) | 80% (positive charge) | 65% (positive charge) |
| (C) | Volume average diameter of charged particles | 0.9 µm | 0.7 µm | 1.1 µm | 1.2 µm |
| (D) | Viscosity of ink composition | 1.5 mPa·s | 1.6 mPa·s | 1.4 mPa·s | 1.8 mPa·s |

### <Inkjet Recording>

Ink Compositions [EC-1], [EM-1], [EY-1] and [EB-1] for four colors were filled into ink tanks connected to four heads, respectively, of the inkjet recording apparatus shown in Figs. 1 to 3. The ejection head used here was a 150-dpi (stagger arrangement in three arrays with a channel density of 50 dpi) 833-channel head of the type shown in Fig. 2 and the fixing means used was a silicon rubber-made heat roller self-containing a heater of 1 kW. As the ink temperature-controlling means, an immersion heater and a stirring blade were provided in the ink tank, the ink temperature was set to 30°C and the temperature was controlled by a thermostat while rotating the stirring blade at 30 rpm. The stirring blade was used here to serve also as the stirring means for preventing precipitation and aggregation. A part of the ink flow path was made transparent, and an LED light-emitting device and a light-detecting device were disposed to sandwich the transparent portion. Based on the output signal therefrom, the concentration was controlled by charging a diluting solution (Isoper G) for ink or a concentrated ink (prepared by adjusting the solid concentration of the ink composition prepared above to a 2-fold concentration). The recording medium used was a slightly coated paper sheet for offset printing. After removing dusts on the surface of the recording medium by air pump suction, the ejection head was approximated to the recording medium until the image-forming position. Then, the image data to be recorded were transmitted to the image data arithmetic and control part and the ink composition was ejected by sequentially moving the ejection head while conveying the recording medium by the rotation of the conveyance belt, thereby forming an image with an image drawing resolution of 2,400 dpi. The conveyance belt used here was obtained by laminating a metal belt and a polyimide film. In the vicinity of one edge of this belt, a linear marker was disposed along the conveyance direction and while optically reading this marker by the conveyance belt position-detecting means and driving the position-controlling means, the image was formed. At this time, the distance between the ejection head and the recording medium was kept to 0.5 mm according to the output from an optical gap-detecting device. The surface potential of the recording medium at the ejection was set to -1.5 kV. In performing the ejection, a pulse voltage of +500 V was applied (pulse width: 50 µsec) and the image was formed at a driving frequency of 15 kHz.

Immediately after the recording, the image was fixed by using a heat roller. At the fixing, the temperature of the coated paper was 90°C and the contacting time with the heat roller was 0.3 seconds.

On the image-recorded material (printed matter) obtained, streaked unevenness or bleeding of ink was not observed and a very clear image was formed. During the recording, image formation failure and the like were not generated at all and the image was completely free from deterioration due to change in the dot size or the like even when the ambient temperature was changed or the recording time was increased. Thus, good image formation could be performed. After the completion of recording, the inkjet recording apparatus was retreated to 50 mm from the position close to the conveyance belt so as to protect the inkjet head.

Also, after the completion of recording, the head was cleaned by supplying Isoper G in place of ink for 10 minutes and then, the head was housed in a cover filled with vapor of Isoper G, as a result, a good image-recorded material could be produced for 1 month without requiring a maintenance operation. Furthermore, even when 100 sheets of the image-recorded materials obtained were superposed and stored at 40°C for 3 days, the image-recorded materials did not adhere to each other.

### [Comparative Example 1]

Ink Composition [RC-1] was prepared in the same manner as in Example 1 except that Charge-Control Agent [CT-1] was not added. The physical values of the obtained [RC-1] are shown in Table 2. The value in (A) electric conductivity of ink composition was small.

When inkjet recording was performed using Ink Composition [RC-1] and using the same apparatus as in Example 1, an ink droplet was not ejected.

### [Comparative Example 2]

Ink Composition [RC-2] was prepared in the same manner as in Example 1 except that in the preparation of Ink Composition [EC-1] of Example 1, 1.5 g of Charge-Control Agent [CT-1] was added. The physical values of the obtained [RC-2] are shown in Table 2. The value in (B) ratio of electric conductivity of charged particle to the ink composition was small.

When inkjet recording was performed using Ink Composition [RC-2] and using the same apparatus as in Example 1, an ink droplet was ejected but bleeding of ink was observed on the obtained image.

### [Comparative Example 3]

Ink Composition [RC-3] was prepared in the same manner as in Example 1 except that [BZ-2] was used in place of Covering Agent [AP-1] ([BZ-2] was used also as the dispersant and used in a total amount of 27.5 g). The physical values of the obtained [RC-3] are shown in Table 2. The value in (C) volume average diameter of charged particles was small.

When inkjet recording was performed using Ink Composition [RC-3] and using the same apparatus as in Example 1, an ink droplet was ejected but bleeding of ink was observed on the obtained image.

### [Comparative Example 4]

Ink Composition [EC-1] of Example 1 was concentrated under pressure to a solid concentration of 35% and this was designated as Ink Composition [RC-4]. The physical values of the obtained [RC-4] are shown in Table 2. The value in (D) viscosity at 25°C of ink composition was large.

When inkjet recording was performed using Ink Composition [RC-C] and using the same apparatus as in Example 1, an ink droplet was not ejected.

**TABLE 2**

| Comparative Example No. | | Comparative Example 1 | Comparative Example 2 | Comparative Example 3 | Comparative Example 4 |
|---|---|---|---|---|---|
| Ink Composition | | [RC-1] | [RC-2] | [RC-3] | [RC-4] |
| (A) | Electric conductivity of ink composition | 2 nS/m | 180 nS/m | 80 nS/m | 260 nS/m |
| (B) | Ratio of electric conductivity of charged particle | 75% (positive charge) | 40% (positive charge) | 70% (positive charge) | 70% (positive charge) |
| (C) | Volume average diameter of charged particles | 0.9 µm | 0.9 µm | 0.15 µm | 0.9 µm |
| (D) | Viscosity of ink composition | 1.4 mPa·s | 1.9 mPa·s | 2.2 mPa·s, | 15 mPa·s |
| Ejection property of ink droplet | | not ejected | ejected but image is blurred | ejected but image is blurred | not ejected |

### [Comparative Example 5]

Inkjet recording was performed by using Ink Composition [EC-1] of Example 1 in the same manner as in Example 1 except that a concentrated ink was not charged. Until the third day, an ink droplet was ejected and a good image-recorded material could be produced, but on the fourth day, bleeding of ink was observed on the image. The ink composition was recovered and the volume average diameter of charged particles was measured and found to be 0.18 µm. The reason why the volume average diameter was decreased is not clearly known but is considered because charged particles having a large diameter were preferentially concentrated and ejected and charged particles having a small diameter were remaining in the ink composition.

### [Example 2]

### <Materials Used>

In Example 2, [AP-2] was used as the covering agent in place of [AP-1]. Covering Agent [AP-2] was obtained by dehydration-condensing adipic acid with a slightly excessive amount of p-xylene glycol to synthesize a polyester having a hydroxyl group at both terminals and then reacting the polyester with hexamethylene diisocyanate. The weight average molecular weight was 20,000, the polydispersion degree (weight average molecular weight/number average molecular weight) was 1.6, the glass transition point (midpoint) was -13°C, the melting point was 75°C and the softening point was 74°C. Also, tetrabutylammonium p-toluenesulfonate obtained from tetrabutylammonium hydroxide and p-toluenesulfonic acid was used. Except for these, the same materials as used in Example 1 were used.

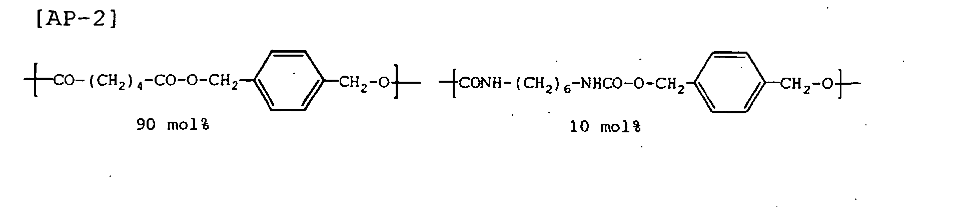

### <Preparation of Ink Composition [EC-2]>

A cyan pigment (10 g), 20 g of Covering Agent [AP-2] and 1 g of tetrabutylammonium p-toluenesulfonate were charged into a flask and mixed under heat for 1 hour while heating the flask by a heater such that the inner temperature became 110°C. Then, 31 g of the obtained mixture was coarsely ground by Trio Blender manufactured by Trio Science K.K. and further finely ground by Model SK-M10 Sample Mill manufactured by Kyoritsu Riko K.K. Thereafter, 31 g of the resultant finely ground material was pre-dispersed together with 9 g of Dispersant [BZ-2], 75 g of Isoper G and glass beads having a diameter of about 3.0 mm in a paint shaker manufactured by Toyo Seiki Seisaku-Sho, Ltd. After removing glass beads, the pre-dispersion was dispersed (formed into particles) together with zirconia ceramic beads having a diameter of about 0.6 mm in Type KDL Dynomill manufactured by Shinmaru Enterprise K.K. at a rotation number of 2,000 rpm for 5 hours while keeping the inner temperature at 25°C and for another 5 hours at 50°C. After removing zirconia ceramic beads, 360 g of Isoper G and 0.4 g of Charge-Control Agent [CT-1] were added to the resultant dispersion to obtain Ink Composition [EC-2].

Ink Composition [EC-2] was measured in the same manner as in Example 1 and found to have the following physical values.
(A) The electric conductivity at 20°C of the ink composition was 120 nS/m.
(B) The ratio of the electric conductivity of the charged particle to the electric conductivity of the ink composition was 85%. The electric charge of the charged particle was positive.
(C) The volume average diameter of charged particles was 1.0 µm.
(D) The viscosity at 20°C of the ink composition was 1.9 mPa·s and the surface tension at 20°C of the ink composition was 23 mN/m.

### <Inkjet Recording>

Using Ink Composition [EC-2], inkjet recording was performed for 1 month in the same manner as in Example 1 while charging a concentrated ink. During this recording, a very clear image free from streaked unevenness or bleeding of ink was obtained and a good image-recorded material could be produced without requiring a maintenance operation.

### [Comparative Example 6]

Ink Composition [RC-5] was prepared in the same manner as in Example 1 except that Polymer [BP-1] obtained in the process of synthesizing [BZ-2] was used in place of Dispersant [BZ-2]. The volume average diameter of charged particles was 2.0 µm.

Ink Composition [EC-5] was measured in the same manner as in Example 1 and found to have the following physical values.
(A) The electric conductivity at 20°C of the ink composition was 80 nS/m.
(B) The ratio of the electric conductivity of the charged particle to the electric conductivity of the ink composition was 40%. The electric charge of the charged particle was positive.
(C) The volume average diameter of charged particles was 2.0 µm.
(D) The viscosity at 20°C of the ink composition was 5.5 mPa·s and the surface tension at 20°C of the ink composition was 30 mN/m.

When inkjet recording was performed using Ink Composition [RC-5] and using the same apparatus as in Example 1, the ejection of an ink droplet was stopped after 2 weeks. The head was disassembled and inspected, as a result, ink particles were attaching to the ejection port to cause clogging of the ejection port. Also, when 100 sheets of the image-recorded materials obtained were superposed and stored at 40°C for 3 days, the image-recorded materials adhered to each other.

### [Comparative Example 7]

Ink Composition [RC-6] was prepared in the same manner as in Example 1 except that a non-graft polymer [BP-2] (weight average molecular weight: 130,000) obtained by directly polymerizing stearyl methacrylate and styrene was used in place of Dispersant [BZ-2]. The volume average diameter of charged particles was 2.8 µm.

Polymer [BP-2] dissolved only in an amount of 3 g or less per 100 g of Isoper G.

Ink Composition [EC-6] was measured in the same manner as in Example 1 and found to have the following physical values.
(A) The electric conductivity at 20°C of the ink composition was 8 nS/m.
(B) The ratio of the electric conductivity of the charged particle to the electric conductivity of the ink composition was 30%. The electric charge of the charged particle was positive.
(C) The volume average diameter of charged particles was 2.8 µm.
(D) The viscosity at 20°C of the ink composition was 3.0 mPa·s and the surface tension at 20°C of the ink composition was 28 mN/m.

When inkjet recording was performed using Ink Composition [RC-6] and using the same apparatus as in Example 1, the ejection of an ink droplet was stopped after 1 week. The head was disassembled and inspected, as a result, ink particles were attaching to the ejection port to cause clogging of the ejection port.

### [Comparative Example 8]

An attempt was made to prepare an ink composition in the same manner as in Example 1 except that a non-graft polymer [BP-3] (weight average molecular weight: 70,000) obtained by polymerizing only styrene was used in place of Dispersant [BZ-2], but particles were not formed.

Polymer [BP-3] was a polymer constituted only by the main chain part of Dispersant [BZ-2] but dissolved only in an amount of 3 g or less per 100 g of Isoper G.

### [Example 3]

### <Materials Used>

In Example 3, the following materials were used.
Magenta pigment (coloring material):
monoazo lake pigment C.I. Pigment Red (57:1) (Symuler
Brilliant Carmine 6B229, produced by Dai-Nippon Ink &
Chemicals, Inc.)
Covering agent: [AP-2] used in Example 2
Dispersant: [BZ-7]
Tetrabutylammonium p-toluenesulfonate
Charge-control agent: [CT-1]
Dispersion medium: Isoper G (produced by Exxon Corp.)

The structures of Covering Agent [AP-2] and Dispersant [BZ-7] are shown below.

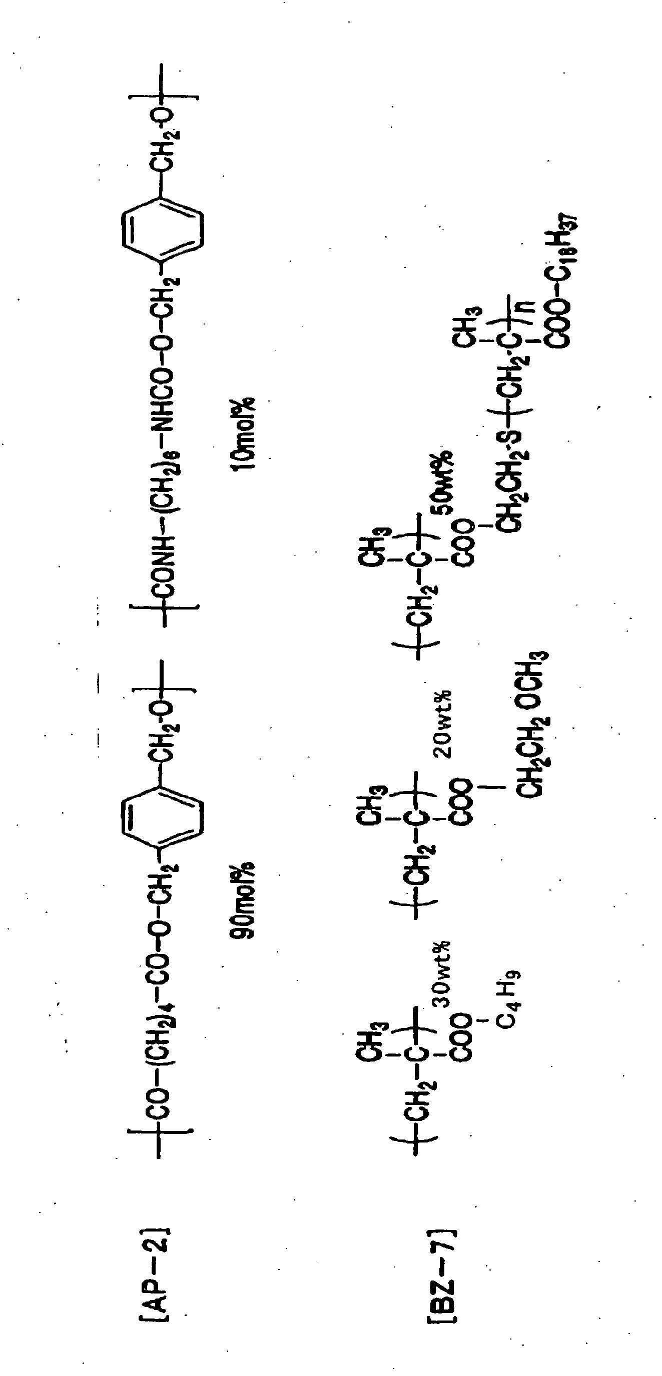

Dispersant [BZ-7] was obtained by radical-polymerizing butyl methacrylate, 2-methoxyethyl methacrylate and Polymer [BP-1] of stearyl methacrylate, having a methacryloyl group at the terminal, which was synthesized in Example 1. The weight average molecular weight was 180,000.

Dispersant [BZ-7] dissolved in an amount of 5 g or more per 100 g of Isoper G, though the solution became white turbid.

### <Preparation of Ink Composition [EM-2]>

A magenta pigment (10 g), 20 g of Covering Agent [AP-2] and 1 g of tetrabutylammonium p-toluenesulfonate were charged into a flask and mixed with stirring under heat for 1 hour while heating the flask by a heater such that the inner temperature became 110°C. Then, 31 g of the obtained mixture was coarsely ground by Trio Blender manufactured by Trio Science K.K. and further finely ground by Model SK-M10 Sample Mill manufactured by Kyoritsu Riko K.K. Thereafter, 31 g of the resultant finely ground material was pre-dispersed together with 9 g of Dispersant [BZ-7], 75 g of Isoper G and glass beads having a diameter of about 3.0 mm in a paint shaker manufactured by Toyo Seiki Seisaku-Sho, Ltd. After removing glass beads, the pre-dispersion was dispersed (formed into particles) together with zirconia ceramic beads having a diameter of about 0.6 mm in Type KDL Dynomill manufactured by Shinmaru Enterprise K.K. at a rotation number of 3,000 rpm for 8 hours while keeping the inner temperature at 40°C. After removing zirconia ceramic beads, 360 g of Isoper G and 0.4 g of Charge-Control Agent [CT-1] were added to the resultant dispersion to obtain Ink Composition [EM-2]. The volume average diameter of charged particles was 0.7 µm.

Ink Composition [EM-2] was measured in the same manner as in Example 1 and found to have the following physical values.
(A) The electric conductivity at 20°C of the ink composition was 120 nS/m.
(B) The ratio of the electric conductivity of the charged particle to the electric conductivity of the ink composition was 54%. The electric charge of the charged particle was positive.
(C) The volume average diameter of charged particles was 0.7 µm.
(D) The viscosity at 20°C of the ink composition was 1.7 mPa·s and the surface tension at 20°C of the ink composition was 26 mN/m.

### <Inkjet Recording>

Using Ink Composition [EM-2],inkjet recording was performed for 1 month in the same manner as in Example 1 while charging a concentrated ink. During this recording, a very clear image free from streaked unevenness or bleeding of ink was obtained and a good image-recorded material could be produced without requiring a maintenance operation.

### [Comparative Example 9]

Ink Composition [RM-1] was prepared in the same manner as in Example 3 except that a non-graft polymer [BP-4] (weight average molecular weight: 180,000) obtained by directly polymerizing stearyl methacrylate, butyl methacrylate and 2-methoxyethyl methacrylate was used in place of Dispersant [BZ-7]. The volume average diameter of charged particles was 2.4 µm.

Polymer [BP-4] dissolved only in an amount of 3 g or less per 100 g of Isoper G.

Ink Composition [RM-1] was measured in the same manner as in Example 1 and found to have the following physical values.
(A) The electric conductivity at 20°C of the ink composition was 9 nS/m.
(B) The ratio of the electric conductivity of the charged particle to the electric conductivity of the ink composition was 36%. The electric charge of the charged particle was positive.
(C) The volume average diameter of charged particles was 2.4 µm.
(D) The viscosity at 20°C of the ink composition was 4.0 mPa·s and the surface tension at 20°C of the ink composition was 29 mN/m.

When inkjet recording was performed using Ink Composition [RM-1] and using the same apparatus as in Example 1, the ejection of an ink droplet was stopped after 2 weeks. The head was disassembled and inspected, as a result, ink particles were attaching to the ejection port to cause clogging of the ejection port.

### [Comparative Example 10]

An attempt was made to prepare an ink composition in the same manner as in Example 3 except that a non-graft polymer [BP-5] (weight average molecular weight: 110,000) obtained by polymerizing butyl methacrylate and 2-methoxyethyl methacrylate was used in place of Dispersant [BZ-7], but particles were not formed.

Polymer [BP-5] was a polymer constituted only by the main chain part of Dispersant [BZ-7] but dissolved only in an amount of 3 g or less per 100 g of Isoper G.

### [Example 4]

### <Materials Used>

In Example 4, the following materials were used.
Yellow pigment (coloring material):
disazo pigment C.I. Pigment Yellow 180 (Toner Y HG,
produced by Clariant K.K.)
Covering agent: [AP-1]
Dispersant: [BZ-8]
Charge-control agent: [CT-1]
Dispersion medium: Isoper G (produced by Exxon Corp.)

The structure of Dispersant [BZ-8] is shown below.

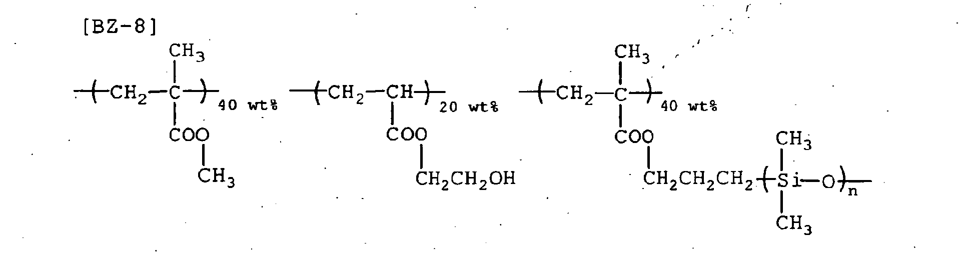

Dispersant [BZ-8] was obtained by polymerizing methyl methacrylate, 2-hydroxyethyl acrylate and methacryloxypropyl-terminated polydimethylsiloxane DMS-R18 (molecular weight: 4,500 to 5,500) produced by Chisso Corporation. The weight average molecular weight was 60,000.

DMS-R18 and Dispersant [BZ-8] each dissolved in an amount of 5 g or more per 100 g of Isoper G.

### <Preparation of Ink Composition [EY-1]>

A yellow pigment (8 g) and 22 g of Covering Agent [AP-1] were charged into a desktop kneader PBV-0.1 manufactured by Irie Shokai K.K. and mixed under heat for 2 hours by setting the heater temperature to 100°C. Then, 30 g of the obtained mixture was coarsely ground by Trio Blender manufactured by Trio Science K.K. and further finely ground by Model SK-M10 Sample Mill manufactured by Kyoritsu Riko K.K. Thereafter, 30 g of the resultant finely ground material was pre-dispersed together with 7.5 g of Dispersant [BZ-8], 75 g of Isoper G and glass beads having a diameter of about 3.0 mm in a paint shaker manufactured by Toyo Seiki Seisaku-Sho, Ltd. After removing glass beads, the pre-dispersion was dispersed (formed into particles) together with zirconia ceramic beads having a diameter of about 0.6 mm in Type KDL Dynomill manufactured by Shinmaru Enterprise K.K. at a rotation number of 3,000 rpm for 8 hours while keeping the inner temperature at 45°C. After removing zirconia ceramic beads, 316 g of Isoper G and 0.6 g of Charge-Control Agent [CT-1] were added to the resultant dispersion to obtain Ink Composition [EY-1]. The volume average diameter of charged particles was 1.2 µm

Ink Composition [EY-1] was measured in the same manner as in Example 1 and found to have the following physical values.
(A) The electric conductivity at 20°C of the ink composition was 90 nS/m.
(B) The ratio of the electric conductivity of the charged particle to the electric conductivity of the ink composition was 73%. The electric charge of the charged particle was positive.
(C) The volume average diameter of charged particles was 1.2 µm.
(D) The viscosity at 20°C of the ink composition was 1.3 mPa·s and the surface tension at 20°C of the ink composition was 20 mN/m.

### <Inkjet Recording>

Using Ink Composition [EY-1], inkjet recording was performed for 1 month in the same manner as in Example 1 while charging a concentrated ink. During this recording, a very clear image free from streaked unevenness or bleeding of ink was obtained and a good image-recorded material could be produced without requiring a maintenance operation.

### [Comparative Example 11]

An attempt was made to prepare an ink composition in the same manner as in Examples 4 except that methacryloxypropyl-terminated polydimethylsiloxane DMS-R18 produced by Chisso Corporation was used in place of Dispersant [BZ-8], but particles were not formed.

### [Comparative Example 12]

An attempt was made to prepare an ink composition in the same manner as in Example 4 except that a non-graft polymer [BP-6] (weight average molecular weight: 140,000) obtained by polymerizing methyl methacrylate and 2-hydroxyethyl acrylate was used in place of Dispersant [BZ-8], but particles were not formed.

Polymer [BP-6] was a polymer constituted only the main chain part of Dispersant [BZ-8] but dissolved only in an amount of 3 g or less per 100 g of Isoper G.

The present invention can ensure that an ink droplet can be always stably ejected in inkjet recording over a long period of time and a high-quality image can be formed for a long period of time, by seting the electric conductivity and the viscosity of the composition, and the electric conductivity of the charged particle to the specified range.

This application is based on Japanese patent application JP 2003-122111, filed on April 25, 2003 and Japanese patent application JP 2003-154781, filed on May 30, 2003, the entire content of which is hereby incorporated by reference, the same as if set forth at length.

## Claims

1. An inkjet recording ink composition comprising a charged particle containing 0.1 to 50 wt.% of a pigment covered by 0.1 to 40 wt.% of a covering material based on the entire ink composition, 20 to 99 wt.% of a dispersion medium, 0.1 to 30 wt.% of a dispersant and 0.0001 to 10 wt.% of a charge-control agent,
wherein said ink composition satisfies all of the following conditions (A) to (D):
(A) the electric conductivity at 20°C of the ink composition is from 10 to 300 nS/m,
(B) the electric conductivity at 20°C of the charged particle is 50% or more of the electric conductivity of the ink composition,
(C) the volume average diameter of the charged particle is from 0.2 to 5.0 µm, and
(D) the viscosity at 20°C of the ink composition is from 0.5 to 5 mPa·s,
wherein the covering agent is a polymer, containing any one of the constituent units represented by the following formulae (1) to (4). 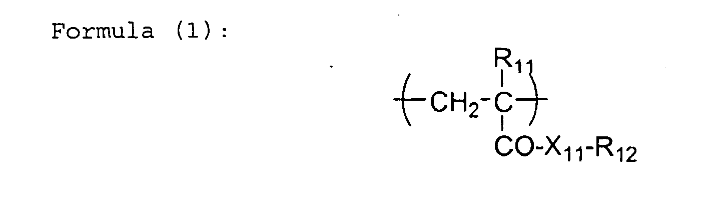 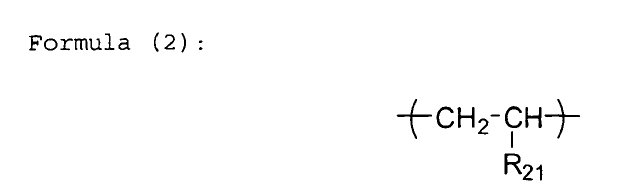 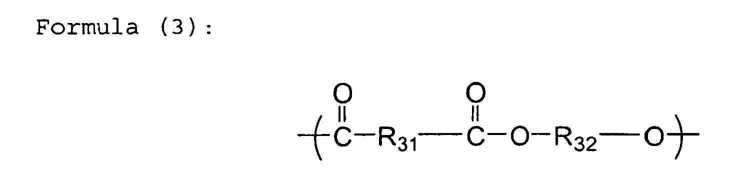 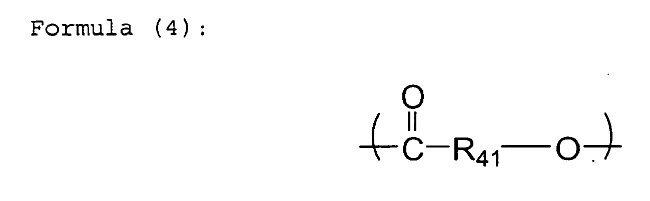 wherein X₁₁ represents an oxygen atom or -N(R₁₃)-, R₁₁ represents a hydrogen atom or a methyl group, R₁₂ represents a hydrocarbon group having from 1 to 30 carbon atoms, R₁₃ represents a hydrogen atom or a hydrocarbon group having from 1 to 30 carbon atoms, R₂₁ represents a hydrogen atom or a hydrocarbon group having from 1 to 20 carbon atoms, and R₃₁, R₃₂ and R₄₁ each independently represents a divalent hydrocarbon group having from 1 to 20 carbon atoms, provided that the hydrocarbon groups of R₁₂, R₂₁, R₃₁, R₃₂ and R₄₁ each may contain an ether bond, an amino group, a hydroxy group or a halogen-substituted group,
and the dispersant is a graft polymer comprising at least a polymer component containing at least either one of the constituent units represented by the following formulae (5) and (6), and a polymer component containing a constituent unit represented by the following formula (7) at least as a graft chain: 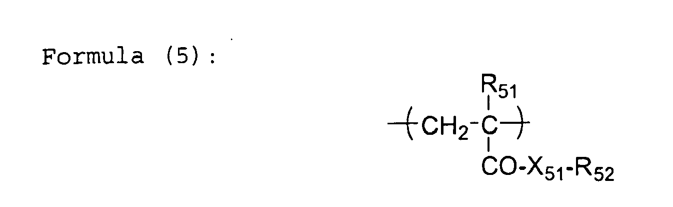 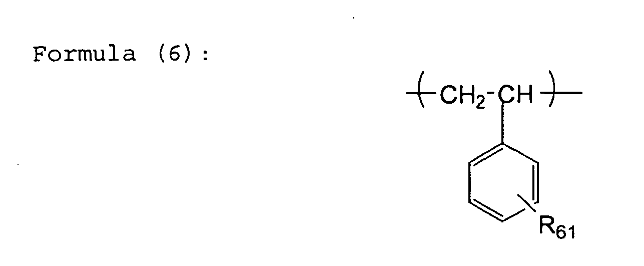 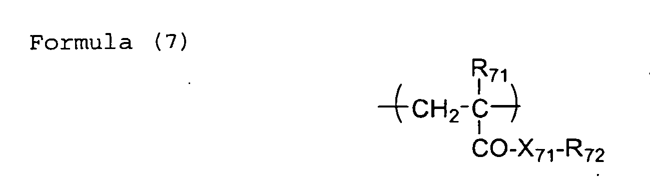 wherein X₅₁ represents an oxygen atom or -N(R₅₃)-, R₅₁ represents a hydrogen atom or a methyl group, R₅₂ represents a hydrocarbon group having from 1 to 10 carbon atoms, R₅₃ represents a hydrogen atom or a hydrocarbon group having from 1 to 10 carbon atoms, R₆₁ represents a hydrogen atom, a hydrocarbon group having from 1 to 20 carbon atoms, a halogen atom, a hydroxyl group or an alkoxy group having from 1 to 20 carbon atoms, X₇₁ represents an oxygen atom or -N(R₇₃)-, R₇₁ represents a hydrogen atom or a methyl group, R₇₂ represents a hydrocarbon group having from 4 to 30 carbon atoms, and R₇₃ represents a hydrogen atom or a hydrocarbon group having from 1 to 30 carbon atoms, provided that the hydrocarbon groups of R₅₂ and R₇₂ each may contain an ether bond, an amino group, a hydroxy group or a halogen-substituted group.

2. The inkjet recording ink composition as claimed in claim 1, wherein the charged particle has an electric charge amount of from 5 to 200 µC/g.

3. An inkjet recording method comprising spraying, by utilizing an electrostatic field, and ink droplet of an ink composition comprising a dispersion medium and a charged particle containing coloring material, said ink composition satisfying all of the following conditions (A) to (D),
wherein the method comprises: circulating the ink composition in an ink chamber having an ejection opening; and applying a voltage to a control electrode in the periphery of the ejection opening to spray the ink droplet from the tip of an ink guide, in which the ink guide is present in the ejection opening and the tip of the ink guide faces a recording medium:
(A) the electric conductivity at 20°C of the ink composition is from 10 to 300 nS/m,
(B) the electric conductivity at 20°C of the charged particle is 50% or more of the electric conductivity of the ink composition,
(C) the volume average diameter of the charged particle is from 0.2 to 5.0 µm, and
(D) the viscosity at 20°C of the ink composition is from 0.5 to 5 mPa·s.

4. An inkjet recording method comprising spraying, by an inkjet recording system utilizing an electrostatic field, an ink droplet of an ink composition comprising a dispersion medium and a charged particle containing a coloring material, wherein an ink composition having a high concentration is replenished so that the ink composition used can constantly satisfy all of the following conditions (A) to (D):
(A) the electric conductivity at 20°C of the ink composition is from 10 to 300 nS/m,
(B) the electric conductivity at 20°C of the charged particle is 50% or more of the electric conductivity of the ink composition,
(C) the volume average diameter of the charged particle is from 0.2 to 5.0 µm, and
(D) the viscosity at 20°C of the ink composition is from 0.5 to 5 mPa · s.

5. The inkjet recording method as claimed in claim 4, wherein the charged particle is dispersed in the dispersion medium by using a graft polymer as a dispersant.

6. The inkjet recording method as claimed in claim 5, wherein said graft polymer comprises a main chain moiety and a side chain moiety of a graft chain, in which the main chain moiety is not dissolved in the dispersion medium and the side chain moiety is dissolved in the dispersion medium.

7. The inkjet recording method as claimed in claim 4, wherein that charged particle has an electric charge amount of from 5 to 200 µC/g.

8. The inkjet recording method as claimed in claim 4, which comprises the dispersion medium in an amount of from 20 to 99 wt% based on the entire ink composition.

9. The inkjet recording method as claimed in claim 4 wherein the coloring material is a pigment and the pigment content is from 0.1 to 50 wt% based on the entire ink composition.

10. The inkjet recording method as claimed in claim 4 wherein the charged particle is a pigment coated with a covering agent.

## Patentansprüche

1. Tintenzusammensetzung für die Tintenstrahlaufzeichnung, umfassend ein geladenes Teilchen, das 0,1 bis 50 Gew.% eines Pigments enthält, bedeckt mit 0,1 bis 40 Gew.% eines Bedeckungsmaterials, bezogen auf die gesamte Tintenzusammensetzung, 20 bis 99 Gew.% eines Dispersionsmediums, 0,1 bis 30 Gew.% eines Dispergiermittels und 0,0001 bis 10 Gew.% eines Ladungsregulierungsmittels,
worin die Tintenzusammensetzung die folgenden Bedingungen (A) bis (D) erfüllt:
(A) die elektrische Leitfähigkeit der Tintenzusammensetzung bei 20°C beträgt 10 bis 300 nS/m,
(B) die elektrische Leitfähigkeit des geladenen Teilchens bei 20°C beträgt 50 % oder mehr der elektrischen Leitfähigkeit der Tintenzusammensetzung,
(C) der volumengemittelte Durchmesser des geladenen Teilchens beträgt 0,2 bis 5,0 µm und
(D) die Viskosität der Tintenzusammensetzung bei 20°C beträgt 0,5 bis 5 mPa·s,
worin das Bedeckungsmittel ein Polymer ist, das eine der durch die folgenden Formeln (1) bis (4) dargestellten Bestandteileinheiten enthält: 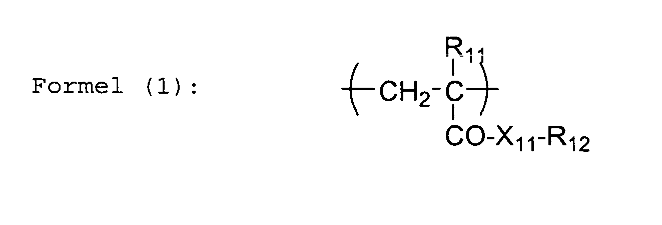 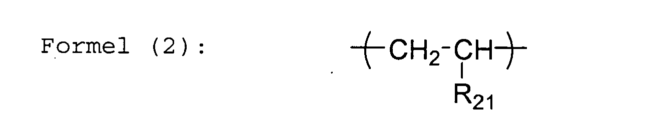 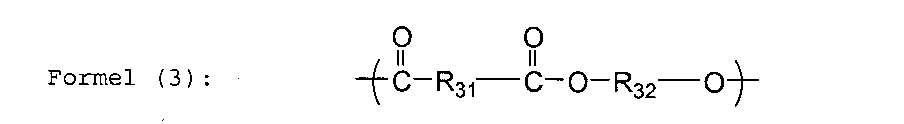 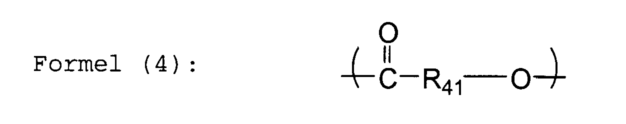 worin X₁₁ ein Sauerstoffatom oder -N(R₁₃)- darstellt, R₁₁ ein Wasserstoffatom oder eine Methylgruppe darstellt, R₁₂ eine Kohlenwasserstoffgruppe mit 1 bis 30 Kohlenstoffatomen darstellt, R₁₃ ein Wasserstoffatom oder eine Kohlenwasserstoffgruppe mit 1 bis 30 Kohlenstoffatomen darstellt, R₂₁ ein Wasserstoffatom oder eine Kohlenwasserstoffgruppe mit 1 bis 20 Kohlenstoffatomen darstellt und R₃₁, R₃₂ und R₄₁ jeweils unabhängig voneinander eine zweiwertige Kohlenwasserstoffgruppe mit 1 bis 20 Kohlenstoffatomen darstellen, unter der Maßgabe, daß die Kohlenwasserstoffgruppen R₁₂, R₂₁, R₃₁, R₃₂ und R₄₁ jeweils eine Etherbindung, eine Aminogruppe, eine Hydroxygruppe oder eine Halogen-substituierte Gruppe enthalten können,
und das Dispergiermittel ein Pfropfpolymer ist, umfassend mindestens eine Polymerkomponente, die mindestens eine der durch die folgenden Formeln (5) und (6) dargestellten Bestandteileinheiten enthält, und eine Polymerkomponente, die eine durch die folgende Formel (7) dargestellte Bestandteileinheit enthält, zumindest als Pfropfkette: 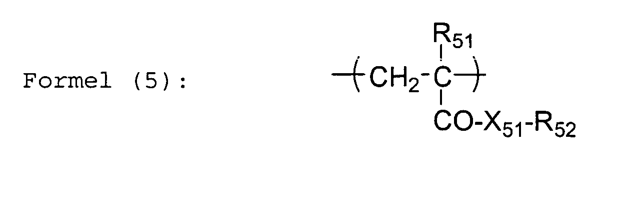 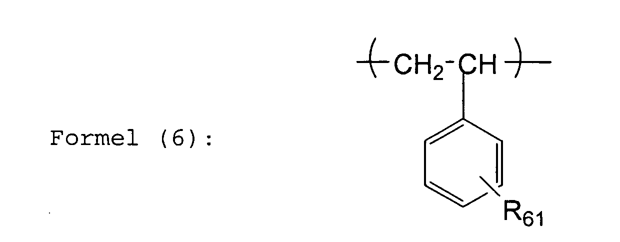 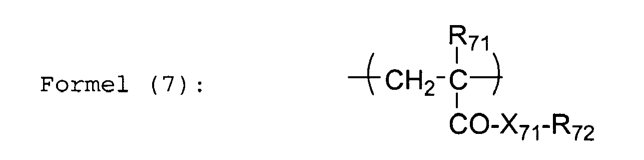 worin X₅₁ ein Sauerstoffatom oder -N(R₅₃)- darstellt, R₅₁ ein Wasserstoffatom oder eine Methylgruppe darstellt, R₅₂ eine Kohlenwasserstoffgruppe mit 1 bis 10 Kohlenstoffatomen darstellt, R₅₃ ein Wasserstoffatom oder eine Kohlenwasserstoffgruppe mit 1 bis 10 Kohlenstoffatomen darstellt, R₆₁ ein Wasserstoffatom, eine Kohlenwasserstoffgruppe mit 1 bis 20 Kohlenstoffatomen, ein Halogenatom, eine Hydroxylgruppe oder eine Alkoxygruppe mit 1 bis 20 Kohlenstoffatomen darstellt, X₇₁ ein Sauerstoffatom oder -N(R₇₃)-darstellt, R₇₁ ein Wasserstoffatom oder eine Methylgruppe darstellt, R₇₂ eine Kohlenwasserstoffgruppe mit 4 bis 30 Kohlenstoffatomen darstellt und R₇₃ ein Wasserstoffatom oder eine Kohlenwasserstoffgruppe mit 1 bis 30 Kohlenstoffatomen darstellt, unter der Maßgabe, daß die Kohlenwasserstoffgruppen R₅₂ und R₇₂ jeweils eine Etherbindung, eine Aminogruppe, eine Hydroxygruppe oder eine Halogen-substituierte Gruppe enthalten können.

2. Tintenzusammensetzung für die Tintenstrahlaufzeichnung gemäß Anspruch 1, worin das geladene Teilchen eine elektrische Ladungsmenge von 5 bis 200 µC/g aufweist.

3. Tintenstrahlaufzeichnungsverfahren, umfassend das Versprühen eines Tintentropfens einer Tintenzusammensetzung, die ein Dispersionsmedium und ein geladenes Teilchen umfaßt, das ein Färbungsmaterial enthält, durch Verwendung eines elektrostatischen Feldes, wobei die Tintenzusammensetzung die folgenden Bedingungen (A) bis (D) erfüllt und worin das Verfahren folgendes umfaßt: Zirkulieren der Tintenzusammensetzung in einer Tintenkammer mit einer Ausstoßöffnung und Anlegen einer Spannung an eine Kontrollelektrode in der Peripherie der Ausstoßöffnung, um den Tintentropfen von der Spitze einer Tintenführung aus zu versprühen, wobei sich die Tintenführung in der Ausstoßöffnung befindet und die Spitze der Tintenführung einem Aufzeichnungsmedium gegenübersteht:
(A) die elektrische Leitfähigkeit der Tintenzusammensetzung bei 20°C beträgt 10 bis 300 nS/m,
(B) die elektrische Leitfähigkeit des geladenen Teilchens bei 20°C beträgt 50 % oder mehr der elektrischen Leitfähigkeit der Tintenzusammensetzung,
(C) der volumengemittelte Durchmesser des geladenen Teilchens beträgt 0,2 bis 5,0 µm und
(D) die Viskosität der Tintenzusammensetzung bei 20°C beträgt 0,5 bis 5 mPa·s.

4. Tintenstrahlaufzeichnungsverfahren, umfassend das Versprühen eines Tintentropfens einer Tintenzusammensetzung, die ein Dispersionsmedium und ein geladenes Teilchen umfaßt, das ein Färbungsmaterial enthält, durch ein Tintenstrahlaufzeichnungssystem, das ein elektrostatisches Feld verwendet, worin eine Tintenzusammensetzung mit einer hohen Konzentration regeneriert wird, so daß die verwendete Tintenzusammensetzung beständig die folgenden Bedingungen (A) bis (D) erfüllt :
(A) die elektrische Leitfähigkeit der Tintenzusammensetzung bei 20°C beträgt 10 bis 300 nS/m,
(B) die elektrische Leitfähigkeit des geladenen Teilchens bei 20°C beträgt 50 % oder mehr der elektrischen Leitfähigkeit der Tintenzusammensetzung,
(C) der volumengemittelte Durchmesser des geladenen Teilchens beträgt 0,2 bis 5,0 µm und
(D) die Viskosität der Tintenzusammensetzung bei 20°C beträgt 0,5 bis 5 mPa · s.

5. Tintenstrahlaufzeichnungsverfahren gemäß Anspruch 4, worin das geladene Teilchen unter Verwendung eines Pfropfpolymer als Dispergiermittel in dem Dispersionsmedium dispergiert ist.

6. Tintenstrahlaufzeichnungsverfahren gemäß Anspruch 5, worin das Pfropfpolymer einen Hauptkettenteil und einen Seitenkettenteil aus einer Pfropfkette umfaßt, worin der Hauptkettenteil nicht in dem Dispersionsmedium gelöst ist und der Seitenkettenteil in dem Dispersionsmedium gelöst ist.

7. Tintenstrahlaufzeichnungsverfahren gemäß Anspruch 4, worin das geladene Teilchen eine elektrische Ladungsmenge von 5 bis 200 µC/g aufweist.

8. Tintenstrahlaufzeichnungsverfahren gemäß Anspruch 4, das das Dispersionsmedium in einer Menge von 20 bis 99 Gew.% bezogen auf die gesamte Tintenzusammensetzung umfaßt.

9. Tintenstrahlaufzeichnungsverfahren gemäß Anspruch 4, worin das Färbungsmaterial ein Pigment ist und der Pigmentgehalt 0,1 bis 50 Gew.% bezogen auf die gesamte Tintenzusammensetzung beträgt.

10. Tintenstrahlaufzeichnungsverfahren gemäß Anspruch 4, worin das geladene Teilchen ein Pigment ist, das mit einem Bedeckungsmittel beschichtet ist.

## Revendications

1. Composition d'encre pour enregistrement à jet d'encre comprenant une particule chargée contenant entre 0,1 et 50 % en poids d'un pigment recouvert par entre 0,1 et 40 % en poids d'un matériau de revêtement en se basant sur l'entière composition d'encre, entre 20 et 99 % en poids d'un milieu de dispersion, entre 0,1 et 30 % en poids d'un dispersant et entre 0,0001 et 10 % en poids d'un agent de contrôle de charge,
dans laquelle ladite composition d'encre remplit toutes les conditions (A) à (D) suivantes :
(A) la conductivité électrique à 20°C de la composition d'encre est comprise entre 10 et 300 nS/m,
(B) la conductivité électrique à 20°C de la particule chargée représente 50 % ou plus de la conductivité électrique de la composition d'encre,
(C) le diamètre volumique moyen de la particule chargée est compris entre 0,2 et 5,0 µm, et
(D) la viscosité à 20°C de la composition d'encre est comprise entre 0,5 et 5 mPa·s,
dans laquelle l'agent de revêtement est un polymère, contenant l'une quelconque des unités constituantes représentées par les formules (1) à (4) suivantes : 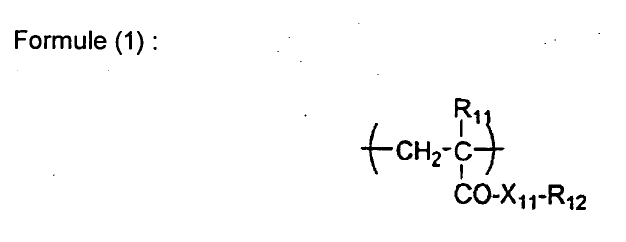 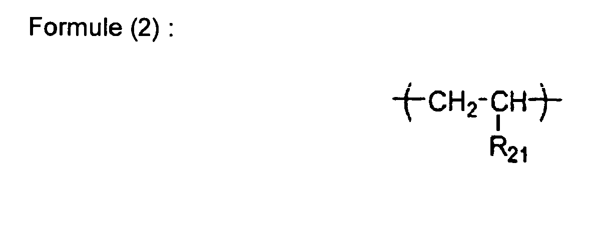 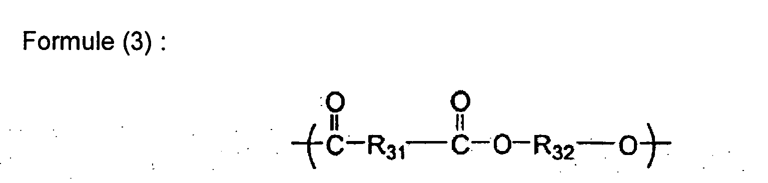 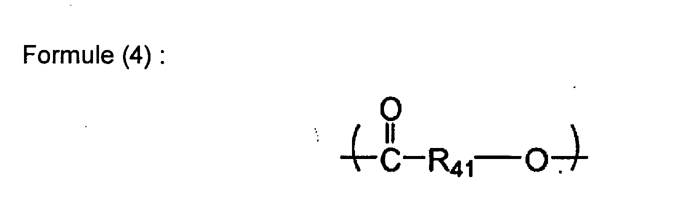 dans lesquelles X₁₁ représente un atome d'oxygène ou -N(R₁₃)-, R₁₁ représente un atome d'hydrogène ou un groupe méthyle, R₁₂ représente un groupe hydrocarboné ayant entre 1 et 30 atomes de carbone, R₁₃ représente un atome d'hydrogène ou un groupe hydrocarboné ayant entre 1 et 30 atomes de carbone, R₂₁ représente un atome d'hydrogène ou un groupe hydrocarboné ayant entre 1 et 20 atomes de carbone, et R₃₁, R₃₂ et R₄₁ représentent chacun indépendamment un groupe hydrocarboné divalent ayant entre 1 et 20 atomes de carbone, à la condition que les groupes hydrocarbonés de R₁₂, R₂₁, R₃₁, R₃₂ et R₄₁ puissent chacun contenir une liaison éther, un groupe amino, un groupe hydroxy ou un groupe substitué par un atome d'halogène,
et le dispersant est un polymère greffé comprenant au moins un composant polymère contenant au moins l'une quelconque des unités constituantes représentées par les formules (5) et (6) suivantes, et un composant polymère contenant une unité constituante représentée par la formule (7) suivante au moins en tant que chaîne greffée : 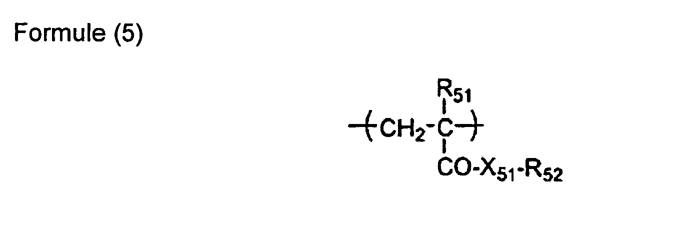 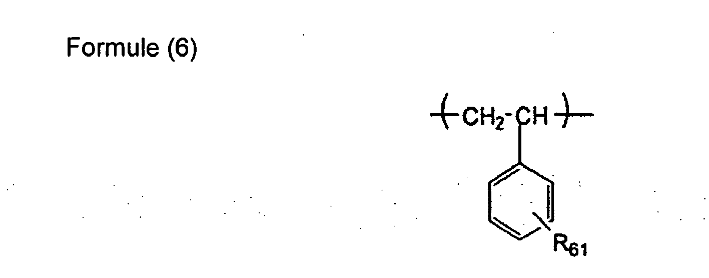 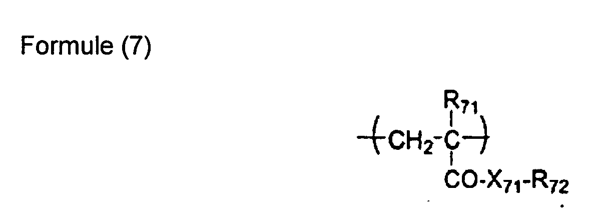 dans lesquelles X₅₁ représente un atome d'oxygène ou -N(R₅₃)-, R₅₁ représente un atome d'hydrogène ou un groupe méthyle, R₅₂ représente un groupe hydrocarboné ayant entre 1 et 10 atomes de carbone, R₅₃ représente un atome d'hydrogène ou un groupe hydrocarboné ayant entre 1 et 10 atomes de carbone, R₆₁ représente un atome d'hydrogène, un groupe hydrocarboné ayant entre 1 et 20 atomes de carbone, un atome d'halogène, un groupe hydroxyle ou un groupe alcoxy ayant entre 1 et 20 atomes de carbone, X₇₁ représente un atome d'oxygène ou -N(R₇₃)-, R₇₁ représente un atome d'hydrogène ou un groupe méthyle, R₇₂ représente un groupe hydrocarboné ayant entre 4 et 30 atomes de carbone, et R₇₃ représente un atome d'hydrogène ou un groupe hydrocarboné ayant entre 1 et 30 atomes de carbone, à la condition que les groupes hydrocarbonés de R₅₂ et R₇₂ puissent chacun contenir une liaison éther, un groupe amino, un groupe hydroxy ou un groupe substitué par un atome d'halogène.

2. Composition d'encre pour enregistrement à jet d'encre selon la revendication 1, dans laquelle la particule chargée a une quantité de charge électrique comprise entre 5 et 200 µC/g.

3. Procédé d'enregistrement à jet d'encre comprenant la pulvérisation, par utilisation d'un champ électrostatique, d'une gouttelette d'encre d'une composition d'encre comprenant un milieu de dispersion et une particule chargée contenant un matériau colorant, ladite composition d'encre remplissant toutes les conditions (A) à (D) suivantes,
Le procédé comprenant : circuler la composition d'encre dans une chambre à encre ayant une ouverture pour éjection ; et appliquer une tension à une électrode de contrôle à la périphérie de l'ouverture pour éjection pour pulvériser la gouttelette d'encre à partir de la pointe d'un guide d'encre, dans lequel le guide d'encre est présent dans l'ouverture pour éjection et la pointe du guide d'encre fait face au milieu d'enregistrement :
(A) la conductivité électrique à 20°C de la composition d'encre est comprise entre 10 et 300 nS/m,
(B) la conductivité électrique à 20°C de la particule chargée représente 50 % ou plus de la conductivité électrique de la composition d'encre,
(C) le diamètre volumique moyen de la particule chargée est compris entre 0,2 et 5,0 µm, et
(D) la viscosité à 20°C de la composition d'encre est comprise entre 0,5 et 5 mPa · s.

4. Procédé d'enregistrement à jet d'encre comprenant la pulvérisation, par un système d'enregistrement à jet d'encre utilisant un champ électrostatique, d'une gouttelette d'encre d'une composition d'encre comprenant un milieu de dispersion et une particule chargée contenant un matériau colorant, dans lequel une composition d'encre ayant une concentration élevée est recompléter de telle sorte que la composition d'encre utilisée puisse constamment remplir toutes les conditions (A) à (D) suivantes :
(A) la conductivité électrique à 20°C de la composition d'encre est comprise entre 10 et 300 nS/m,
(B) la conductivité électrique à 20°C de ia particule chargée représente 50 % ou plus de la conductivité électrique de la composition d'encre,
(C) le diamètre volumique moyen de la particule chargée est compris entre 0,2 et 5,0 µm, et
(D) la viscosité à 20°C de la composition d'encre est comprise entre 0,5 et 5 mPa·s.

5. Procédé d'enregistrement à jet d'encre selon la revendication 4, dans lequel la particule chargée est dispersée dans le milieu de dispersion en utilisant un polymère greffé en tant que dispersant.

6. Procédé d'enregistrement à jet d'encre selon la revendication 5, dans lequel ledit polymère greffé comprend un segment de la chaîne principale et un segment de la chaîne latérale d'une chaîne greffée, où le segment de la chaîne principale n'est pas dissous dans le milieu de dispersion et le segment de la chaîne latérale est dissous dans le milieu de dispersion.

7. Procédé d'enregistrement à jet d'encre selon la revendication 4, dans lequel la particule chargée a une quantité de charge électrique comprise entre 5 et 200 µC/g.

8. Procédé d'enregistrement à jet d'encre selon la revendication 4, qui comprend le milieu de dispersion en une quantité comprise entre 20 et 99 % en poids en se basant sur toute la composition d'encre.

9. Procédé d'enregistrement à jet d'encre selon la revendication 4, dans lequel le matériau colorant est un pigment et la quantité de pigment présente est comprise entre 0,1 et 50 % en poids en se basant sur l'entière composition d'encre.

10. Procédé d'enregistrement à jet d'encre selon la revendication 4, dans lequel la particule chargée est un pigment recouvert d'un agent de revêtement.
